# EUROPEAN PATENT SPECIFICATION

(11) **EP 3 015 350 B1**
(45) Date of publication and mention of the grant of the patent: **03.01.2018**
(21) Application number: 14191468.9
(22) Date of filing: 03.11.2014
(51) Int. Cl.: B62J 23/00, F01N 13/18

(54) **SADDLE-RIDING VEHICLE**
SATTELFAHRZEUG
VÉHICULE DE TYPE À SELLE

(43) Date of publication of application: 04.05.2016
(73) Proprietor: Yamaha Hatsudoki Kabushiki Kaisha, Iwata-shi, Shizuoka 438-8501 (JP)
(72) Inventor: Inomori, Toshinori, Iwata-shi, Shizuoka 438-8501 (JP); Inoue, Ryuji, Iwata-shi, Shizuoka 438-8501 (JP)
(74) Representative: Grünecker Patent- und Rechtsanwälte PartG mbB

(56) References cited:
- FR-A1- 2 964 938
- JP-A- 2006 104 945
- JP-A- 2013 036 422

## Description

The present invention relates to a saddle-riding vehicle according to the preamble of independent claim 1. Such a saddle-riding vehicle can be taken from the prior art document JP 2006-104945 A.

Prior art document FR 2 964 938 A1 discloses a vehicle with a conductor seat unit arranged at a front side of the vehicle with respect to a rear wheel unit. An oscillation damper e.g. spring damper, is arranged at a front side of the vehicle with respect to the rear wheel unit. The damper has a rod part housed in a tube part in a movable manner. The damper is extended vertically, from lateral view of the vehicle, with one of the tube part or rod part pivotingly coupled to a casing part and with one of the tube part or rod part pivotingly coupled to the wheel unit. The wheel unit includes an engine and rear wheels driven by said engine. The engine comprises a cylinder that extends in forward direction, an exhaust pipe that extends from sad cylinder wherein a catalytic converter for cleaning exhaust gas is arranged within the middle part of said exhaust pipe.

Some motorcycles have a structure that a fuel tank is disposed under a flat footboard due to reasons such as capability of increase in capacity of a storage box (see e.g., Japan Laid-open Patent Application Publication No. JP-A-2007-8316).

On the other hand, saddle-riding vehicles have been demanded to dispose a catalyst for processing exhaust gas as upstream as possible within an exhaust pipe in order to quickly activate the catalyst. For example, Japan Laid-open Patent Application Publication No. JP-A-2013-36422 describes a motorcycle including a catalyst disposed upstream of a silencer.

Further, the motorcycles, described in the Publications Nos. JP-A-2007-8316 and JP-A-2013-36422, respectively include an engine unit composed of an engine, an exhaust pipe connected to the engine, and a silencer connected to the exhaust pipe. The engine unit is of a so-called unit swing type and is pivotably supported by a vehicle body frame. The engine unit is disposed under a seat. A flat footboard, on which a rider puts his/her feet, is disposed under and forward of the seat. The flat footboard is disposed forward of the engine unit. A required space is herein reliably produced for the flat footboard disposed under and forward of the seat due to the structure that the engine unit is disposed under the seat and is pivotably supported by the vehicle body frame.

The temperature of the catalyst becomes higher than that of the exhaust pipe. Further, in one type of saddle-riding vehicle that the engine is at least partially disposed under the seat, the more the catalyst is disposed upstream, the closer the catalyst is disposed toward the foot of the rider. Hence, it is required to consider the thermal effect of the catalyst on the foot of the rider.

On the other hand, in another type of saddle-riding vehicle including the flat footboard, the engine is disposed rearward of the flat footboard. Thus, when the fuel tank is herein disposed under the flat footboard, the more the catalyst is disposed upstream, the closer the catalyst is disposed toward the fuel tank. Hence, it is also required to consider the thermal effect of the catalyst on the fuel tank.

Further, in terms of, for instance, rider's easiness in riding on and off the vehicle, a footrest portion of the flat footboard is preferably wide in the width direction of the vehicle and is also preferably disposed in a low position. When the fuel tank is herein disposed under the flat footboard, the fuel tank is required to be wide in the vehicle width direction so as to reliably have a large capacity. Thus, when the catalyst is located upstream, the fuel tank is likely to be affected by the catalyst.

It is an object of the present invention to provide a saddle-riding vehicle that quickly activates a catalyst and reduces the thermal effect of the catalyst on the foot of a rider and on a fuel tank disposed under a flat footboard. According to the present invention said object is solved by a saddle-riding vehicle having the features of independent claim 1. Preferred embodiments are laid down in the dependent claims.

A saddle-riding vehicle according to an exemplary embodiment includes a vehicle body frame, a seat, a flat footboard, a fuel tank, a vehicle body cover, an opening and an engine unit. The seat is supported by the vehicle body frame. It should be noted that the seat may be directly supported by the vehicle body frame, or alternatively, indirectly supported by the vehicle body frame through another member. The flat footboard is disposed forward of and below the seat. The fuel tank is disposed under the flat footboard. The vehicle body cover is disposed laterally to the fuel tank. The opening is for introducing travelling wind to a space between the fuel tank and the vehicle body cover. The engine unit is disposed rearward of the flat footboard and the fuel tank, and is pivotably supported by the vehicle body frame. The engine unit is at least partially located under the seat. The engine unit includes an engine, an exhaust pipe, a silencer and a catalyst. The engine includes an exhaust port. The exhaust pipe is connected to the exhaust port. The silencer is connected to the exhaust pipe. The catalyst is disposed within the exhaust pipe. The exhaust pipe includes a first exhaust pipe, a catalyst housing portion and a second exhaust pipe. The first exhaust pipe is located upstream of the catalyst and is connected to the exhaust port. The catalyst housing portion accommodates the catalyst, is connected to the first exhaust pipe, and backwardly extends from the first exhaust pipe. The second exhaust pipe is located downstream of the catalyst, is connected to the catalyst housing portion, backwardly extends from the catalyst housing portion and is connected to the silencer. The first exhaust pipe at least partially overlaps with the fuel tank in a vehicle front view. The catalyst housing portion is at least partially disposed rearward of the space between the fuel tank and the vehicle body cover so that the catalyst can be cooled down by travelling wind flowing between the fuel tank and the vehicle body cover during travelling of the vehicle.

In the saddle-riding vehicle according to the present aspect, the catalyst is disposed as upstream as possible within the exhaust pipe. Thus, the catalyst can be quickly activated by speeding up increase in temperature of the catalyst after stating of the engine. Further, after activated, the catalyst can be cooled down by travelling wind flowing between the fuel tank and the vehicle body cover during travelling of the vehicle. Therefore, thermal effect on the foot of a rider can be reduced even when the catalyst is disposed as upstream as possible within the exhaust pipe and is thereby disposed adjacently to a position under the seat. Further, thermal effect on the fuel tank can be reduced even when the catalyst is disposed close to the fuel tank disposed under the flat footboard.

A cylinder axis of the engine is preferably disposed in a direction intersecting with a vertical direction. Further, a pivot center of the engine unit and the catalyst housing portion are preferably located below the cylinder axis. Yet further, the catalyst housing portion is preferably at least partially disposed rearward of the space between the fuel tank and the vehicle body cover in an entire pivot range of the catalyst housing portion. In the structure, the catalyst can be always located in a position frequently receiving travelling wind.

The seat preferably includes a front seat portion on which a rider can seat. Further, the catalyst housing portion is preferably located under the front seat portion in a vehicle side view. Further, the catalyst housing portion is preferably at least partially exposed in the vehicle side view. Yet further, the catalyst housing portion preferably overlaps at an inner lateral portion thereof with the fuel tank in the vehicle front view.

In the structure, the catalyst housing portion can be disposed closer to the center of the vehicle than that entirely disposed outward of the fuel tank in the vehicle width direction. Accordingly, thermal effect on the foot of the rider can be reduced when the rider puts his/her feet on the ground while the vehicle stands still. On the other hand, the catalyst housing portion is at least partially exposed in the vehicle side view. Thus, the outer lateral portion of the catalyst can be more effectively cooled down. Incidentally, travelling wind is unlikely to reach the inner lateral portion of the catalyst housing portion that overlaps with the fuel tank. However, the catalyst housing portion is sufficiently cooled down. Hence, thermal effect on the fuel tank can be reduced.

The fuel tank preferably includes a slope. The slope tilts up to a laterally outward in the vehicle front view. Further, the slope preferably at least partially overlaps with the catalyst housing portion in the vehicle front view. In the structure, the slope guides travelling wind to the catalyst housing portion. Cooling performance of the catalyst can be thereby enhanced.

The slope preferably at least partially overlaps with the first exhaust pipe in the vehicle front view. In the structure, the slope guides travelling wind to the first exhaust pipe. Cooling performance of the catalyst can be thereby further enhanced.

The engine unit preferably further includes a cooling fan device. Further, the catalyst housing portion is preferably at least partially located forward of a rotational center of the cooling fan device. In the structure, the catalyst can be cooled down by air stream produced by the cooling fan device. Cooling performance of the catalyst can be thereby further enhanced.

The engine unit preferably further includes a cooling fan device. Further, the cooling fan device and the catalyst housing portion are preferably disposed laterally on the same side with respect to a vehicle center line extending in the/a vehicle back-and-forth direction. In the structure, the catalyst can be cooled down by air stream produced by the cooling fan device. Cooling performance of the catalyst can be thereby further enhanced.

The vehicle body cover preferably extends to a position rearward of the fuel tank. Further preferably, the catalyst housing portion does not at least partially overlap with the vehicle body cover in a vehicle side view. In the structure, the catalyst housing portion is at least partially exposed. Cooling performance of the catalyst can be thereby further enhanced.

The saddle-riding vehicle preferably further includes a link mechanism. The link mechanism connects the engine unit and the vehicle body frame. Further, the catalyst housing portion is preferably at least partially located laterally to the link mechanism. In the structure, the catalyst housing portion can be disposed as upstream as possible and the lowest ground height can be reliably set to be high in comparison with that disposed under the link mechanism.

The saddle-riding vehicle preferably further includes a link mechanism. The link mechanism connects the engine unit and the vehicle body frame. Further, the catalyst housing portion is preferably at least partially located rearward of the link mechanism in a vehicle bottom view. In the structure, the catalyst housing portion can be disposed as upstream as possible and the lowest ground height can be reliably set to be high in comparison with that disposed under the link mechanism.

The saddle-riding vehicle preferably further includes a protection member. The protection member is disposed under the catalyst housing portion. In the structure, the protection member can protect the catalyst housing portion from obstacles such as a stone.

The saddle-riding vehicle preferably further includes a link mechanism. The link mechanism connects the engine unit and the vehicle body frame. Further, the protection member is preferably attached to the link mechanism. In the structure, the protection member can be easily disposed under the catalyst housing portion.

The protection member is preferably attached to the engine. In the structure, the protection member can be easily disposed under the catalyst housing portion.

The protection member and the catalyst housing portion preferably produce therebetween a wind guide path, a first opening and a second opening. The first opening is located forward of the wind guide path and communicates with an external space. The second opening is located rearward of the wind guide path and communicates with the external space. In the structure, travelling wind flows into the first opening, flows through the wind guide path and flows out of the second opening. Thus, the catalyst can be cooled down. Cooling performance of the catalyst can be thereby further enhanced.

The engine preferably includes a rib. The rib extends to a position below the catalyst housing portion. In the structure, the rib can protect the catalyst housing portion from obstacles such as a stone.

The engine unit preferably further includes a cooling fan device and an engine heat insulation member. The cooling fan device is disposed laterally to the engine. The engine heat insulation member is disposed between the cooling fan device and the catalyst housing portion. In the structure, heat of the catalyst can be inhibited from being directly transferred to cooling wind produced by the cooling fan device. Further, travelling wind is guided by the engine heat insulation member. Cooling performance of the catalyst can be thereby enhanced.

The engine unit preferably further includes an engine heat insulation member. The engine heat insulation member is disposed between the engine and the catalyst housing portion. In the structure, heat of the catalyst can be inhibited from being directly transferred to the engine.

The engine heat insulation member and the catalyst housing portion preferably produce therebetween a wind guide path, a first opening and a second opening. The first opening is located forward of the wind guide path and communicates with an external space. The second opening is located rearward of the wind guide path and communicates with the external space. In the structure, the engine heat insulation member can inhibit heat of the catalyst from being directly transferred to the engine. Further, travelling wind flows into the first opening, flows through the wind guide path and flows out of the second opening. Thus, the catalyst can be cooled down. Cooling performance of the catalyst can be thereby further enhanced.

The saddle-riding vehicle preferably further includes a fuel tank heat insulation member. The fuel tank heat insulation member is disposed between the fuel tank and the catalyst housing portion. In the structure, heat of the catalyst can be inhibited from being directly transferred to the fuel tank.

The saddle-riding vehicle preferably further includes a wind guide member. The wind guide member is for guiding travelling wind flowing under the fuel tank to flow toward the catalyst housing portion, and is disposed between the fuel tank and the catalyst housing portion. In the structure, the wind guide member guides travelling wind, flowing under the fuel tank, to flow toward the catalyst housing portion. Thus, the catalyst can be cooled down. Cooling performance of the catalyst can be thereby further enhanced.

The catalyst housing portion is preferably at least partially located below a bottom surface of the fuel tank while the engine unit is located in the lowest position within a pivot range thereof. In the structure, the catalyst housing portion is at least partially located below the bottom surface of the fuel tank. Thus, travelling wind is likely to reach the catalyst housing portion. Cooling performance of the catalyst can be thereby further enhanced.

The vehicle body frame preferably includes a lower frame. The lower frame runs under the flat footboard and extends rearward. Further, the catalyst housing portion is preferably at least partially located under the lower frame in the vehicle front view. In the structure, the lower frame guides travelling wind to flow toward the catalyst housing portion. Cooling performance of the catalyst can be thereby further enhanced.

### Advantageous Effects of Invention

In the saddle-riding vehicle according to the present aspect, the catalyst is disposed as upstream as possible within the exhaust pipe, and thus, the catalyst can be quickly activated by speeding up increase in temperature of the catalyst after stating of the engine. Further, after activated, the catalyst can be cooled down by travelling wind flowing between the fuel tank and the vehicle body cover during travelling of the vehicle. Therefore, thermal effect on the foot of the rider can be reduced even when the catalyst is disposed as upstream as possible within the exhaust pipe and is thereby disposed adjacently to a position under the seat. Further, thermal effect on the fuel tank can be reduced even when the catalyst is disposed as upstream as possible within the exhaust pipe and is thereby disposed close to the fuel tank disposed under the flat footboard.

### BRIEF DESCRIPTION OF THE DRAWINGS

Referring now to the attached drawings which form a portion of this original disclosure:
FIG. 1 is a right side view of a saddle-riding vehicle;
FIG. 2 is a right side view of a vehicle body frame and an engine unit of the saddle-riding vehicle;
FIG. 3 is a bottom view of the vehicle body frame and the engine unit;
FIG. 4 is a front view of the vehicle body frame and the engine unit;
FIG. 5 is a partial right side view of the saddle-riding vehicle;
FIG. 6 is a partial bottom view of the saddle-riding vehicle;
FIG. 7 is a cross-sectional view of FIG. 6 taken along a line VII-VII;
FIG. 8 is a cross-sectional view of the engine unit;
FIG. 9 is a diagram showing a condition that the engine unit is located in the lowest position within the pivot range thereof;
FIG. 10 is a diagram showing a condition that the engine unit is located in the highest position within the pivot range thereof;
FIG. 11 is a partial front view of the vehicle body frame and the engine unit;
FIG. 12 is a partial view of a saddle-riding vehicle according to a first modification;
FIG. 13 is a partial view of a saddle-riding vehicle according to a second modification;
FIG. 14 is a cross-sectional view of a protection member and a catalyst housing portion according to yet another modification of the first or second modification;
FIG. 15 is a partial view of a saddle-riding vehicle according to a fourth modification;
FIG. 16 is a partial view of a saddle-riding vehicle according to a fifth modification;
FIG. 17 is a partial bottom view of a saddle-riding vehicle according to a sixth modification;
FIG. 18 is a partial view of a saddle-riding vehicle according to a seventh modification;
FIG. 19 is a partial view of a saddle-riding vehicle according to an eighth modification;
FIG. 20 is a partial view of a saddle-riding vehicle according to a ninth modification;
FIG. 21 is a partial view of a saddle-riding vehicle according to a tenth modification;
FIG. 22 is a partial bottom view of a saddle-riding vehicle according to an eleventh modification; and
FIG. 23 is a side view of the saddle-riding vehicle according to the eleventh modification.

### DETAILED DESCRIPTION OF THE EMBODIMENTS

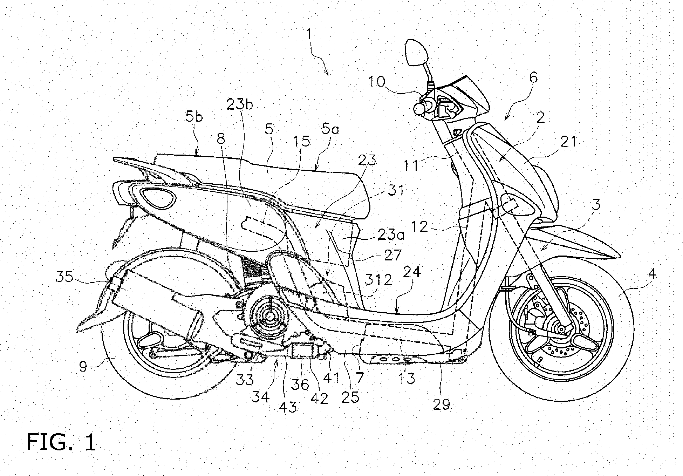

A saddle-riding vehicle according to an exemplary embodiment will be hereinafter explained with reference to the attached drawings. FIG. 1 is a right side view of a saddle-riding vehicle 1 according to the exemplary embodiment. The saddle-riding vehicle 1 is a scooter-type motorcycle. The saddle-riding vehicle 1 includes a vehicle body frame 2, a front fork 3, a front wheel 4, a seat 5, a vehicle body cover 6, a fuel tank 7, an engine unit 8 and a rear wheel 9. It should be noted that in the present exemplary embodiment, directional terms "front", "rear", "right" and "left" and their related terms refer to those seen from a rider seated on the seat 5.

The vehicle body frame 2 includes a head pipe 11 and a down frame 12. The front fork 3 is turnably supported by the head pipe 11. A handle 10 is attached to the upper portion of the front fork 3. The front wheel 4 is rotatably supported by the lower portion of the front fork 3. The down frame 12 downwardly extends from the head pipe 11.

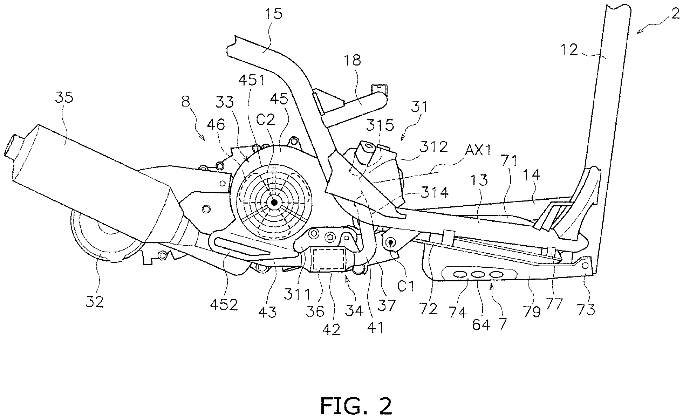

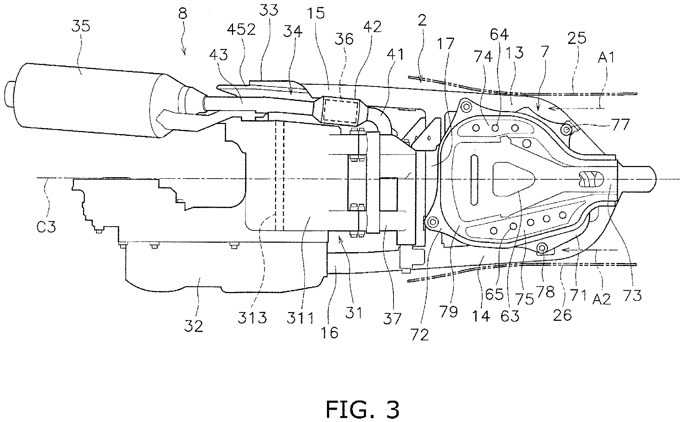

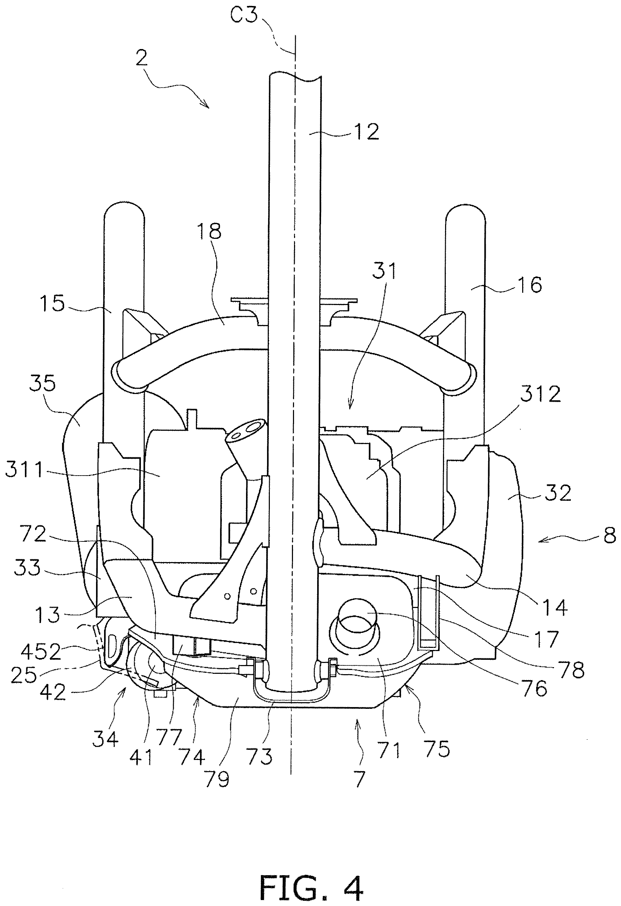

FIG. 2 is a right side view of the vehicle body frame 2 and the engine unit 8. FIG. 3 is a bottom view of the vehicle body frame 2 and the engine unit 8. FIG. 4 is a front view of the vehicle body frame 2 and the engine unit 8. As shown in FIGS. 1 to 4, the vehicle body frame 2 includes a first lower flame 13, a second lower frame 14, a first rear frame 15 and a second rear frame 16.

The first lower frame 13 and the second lower frame 14 are connected to the lower portion of the down frame 12, and backwardly extends therefrom. When described in detail, the first lower frame 13 obliquely tilts up to the rear. The second lower frame 14 obliquely tilts down to the rear. The first lower frame 13 and the second lower frame 14 are disposed away from each other in the width direction of the vehicle. In the present exemplary embodiment, the first lower frame 13 is the right side one of the lower frames, whereas the second lower frame 14 is the left side one of the lower frames. A connection portion between the first lower frame 13 and the down frame 12 is located below that between the second lower frame 14 and the down frame 12.

The first rear frame 15 is connected to the rear portion of the first lower frame 13, and extends therefrom obliquely upward to rear. The second rear frame 16 is connected to the rear portion of the second lower frame 14, and extends therefrom obliquely upward to rear. In the present exemplary embodiment, the first rear frame 15 is the right side one of the rear frames, whereas the second rear frame 16 is the left side one of the rear frames.

It should be noted that portion or all of the head pipe 11, the down frame 12, the lower frames 13 and 14, and the rear frames 15 and 16 may be formed as an integrated member. Alternatively, portion or all of the head pipe 11, the down frame 12, the lower frames 13 and 14, and the rear frames 15 and 16 may be formed as discrete members joined to each other by means of a fixation method such as welding.

As shown in FIG. 3, the vehicle body frame 2 includes a first coupling frame 17. The first coupling frame 17 extends in the vehicle width direction. The first coupling frame 17 is bridged between the first lower frame 13 and the second lower frame 14. Thus, the first coupling frame 17 couples the first lower frame 13 and the second lower frame 14. As shown in FIGS. 2 and 4, the vehicle body frame 2 includes a second coupling frame 18. The second coupling frame 18 is bridged between the first rear frame 15 and the second rear frame 16. Thus, the second coupling frame 18 couples the first rear frame 15 and the second rear frame 16.

As shown in FIG. 1, the seat 5 is supported by the vehicle body frame 2. When described in detail, a housing portion 27 is supported by the vehicle body frame 2, and in turn, supports the seat 5. The seat 5 is disposed over the first rear frame 15 and the second rear frame 16. The seat 5 includes a front seat portion 5a and a rear seat portion 5b. The front seat portion 5a is a portion on which the rider is seated. The rear seat portion 5b is located rearward of the front seat portion 5a. The top surface of the rear seat portion 5b is located above that of the front seat portion 5a. It should be noted that the front seat portion 5a and the rear seat portion 5b are not necessarily required to be clearly separated from each other. The top surface of the rear seat portion 5b may be continued to that of the front seat portion 5a so as to form a stepless flat surface. In the structure, the front seat portion may be the front half of the entire longitudinal length of the seat 5. When the seat 5 alternatively includes a step, the front seat portion may be the portion located forward of the step.

The vehicle body cover 6 is supported by the vehicle body frame 2. The vehicle body cover 6 includes a front cover 21, a lower cover 22 and a rear cover 23. The front cover 21 covers the surrounding of the head pipe 11 and the down frame 12. The lower cover 22 covers the surrounding of the first lower frame 13 and the second lower frame 14.

When described in detail, the lower cover 22 includes a flat footboard 24. The flat footboard 24 is the top surface of the lower cover 22. The flat footboard 24 is disposed below and forward of the seat 5. The flat footboard 24 is disposed over the first lower frame 13 and the second lower frame 14. The first lower frame 13 and the second lower frame 14 run under the flat footboard 24 and extend backward. The flat footboard 24 has a flat shape.

It should be noted that the expression "the flat footboard 24 is flat" means that the flat footboard 24 is flat over the vehicle width direction and does not include a convex portion, by which a space for disposing therein a portion of the vehicle body frame 2 is produced, in the middle thereof in the vehicle width direction. Alternatively, the expression "the flat footboard 24 is flat" means that the flat footboard 24 is flat enough to enable the rider to put his/her feet on any portion of the flat footboard 24. Thus, the flat footboard 24 may herein include, for instance, convexo-concave portions for an anti-slippage purpose or so forth.

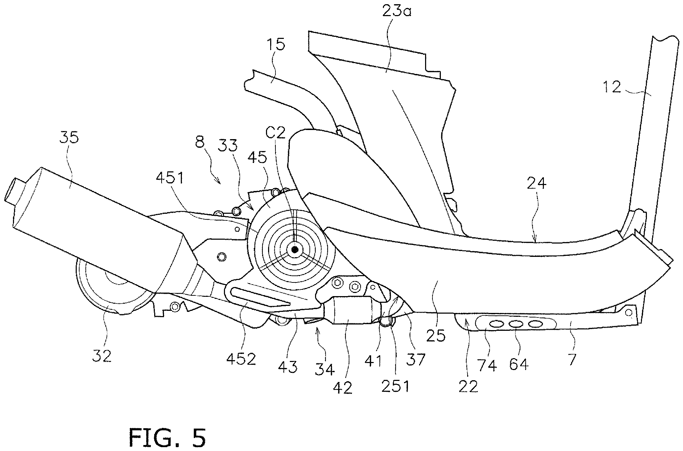

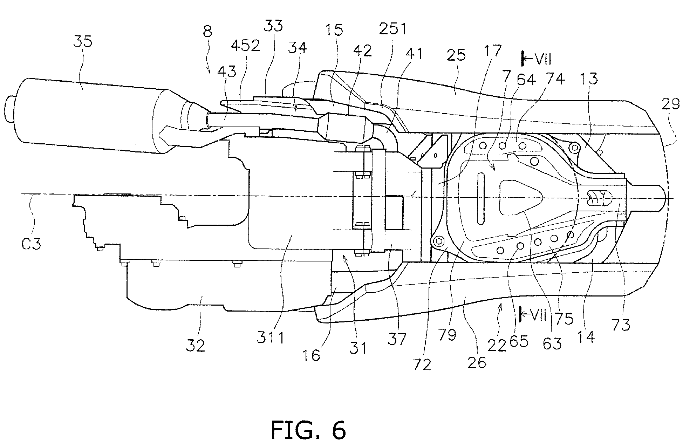

FIG. 5 is a partial right side view of the saddle-riding vehicle 1. FIG. 6 is a partial bottom view of the saddle-riding vehicle 1. As shown in FIGS. 5 and 6, the lower cover 22 includes a first side lower cover 25, a second side lower cover 26 and a center lower cover 29. The first side lower cover 25 is disposed laterally on one side of the fuel tank 7, whereas the second side lower cover 26 is disposed laterally on the other side of the fuel tank 7. In the present exemplary embodiment, the first side lower cover 25 is disposed on the right side of the fuel tank 7, whereas the second side lower cover 26 is disposed on the left side of the fuel tank 7. The center lower cover 29 is disposed between the first side lower cover 25 and the second side lower cover 26. It should be noted that in FIG. 6, only the outer contour of the center lower cover 29 is depicted with dashed two-dotted lines for easy understanding.

The first side lower cover 25 laterally covers the first lower frame 13. The first side lower cover 25 is disposed on the right side of the first lower frame 13. The first side lower cover 25 extends to a position rearward of the fuel tank 7. It should be noted that the first side lower cover 25 is only required to be partially located laterally to the fuel tank 7. The second side lower cover 26 laterally covers the second lower frame 14. The second side lower cover 26 is disposed on the left side of the second lower frame 14.

As shown in FIG. 1, the rear cover 23 is disposed under the seat 5 and covers the surrounding of a space produced under the seat 5 A front portion 23a of the rear cover 23 upwardly extends from the rear end of the flat footboard 24. A lateral portion 23b of the rear cover 23 laterally covers the space produced under the seat 5. It should be noted that the housing portion 27 is disposed under the seat 5. The housing portion 27 is located over the engine unit 8.

The fuel tank 7 is disposed under the flat footboard 24. As shown in FIGS. 2 to 4, the fuel tank 7 includes a tank body 71 and a tank cover 79. The tank body 71 includes an internal space for storing fuel. The tank body 71 is disposed between the first lower frame 13 and the second lower frame 14. The tank body 71 is disposed forward of the first coupling frame 17. In a side view of the vehicle, the tank body 71 overlaps with the first lower frame 13. The tank body 71 includes a first tank attachment portion 77 and a second tank attachment portion 78. The tank body 71 is attached at the first tank attachment portion 77 to the first lower frame 13. The tank body 71 is attached at the second tank attachment portion 78 to the second lower frame 14.

The tank cover 79 is disposed under the tank body 71. The tank cover 79 includes a first cover attachment portion 72 and a second cover attachment portion 73. The first cover attachment portion 72 has a flange shape. The first cover attachment portion 72 is attached to the first lower frame 13, the second lower frame 14 and the first coupling frame 17. The tip of the second cover attachment portion 73 is attached to the lower end of the down frame 12.

The aforementioned center lower cover 29 is not disposed under the tank cover 79. Specifically, the center lower cover 29 is disposed forward of the tank cover 79. The bottom surface of the tank cover 79 is located below the center lower cover 29. In other words, the bottom surface of the fuel tank 7 is located below the center lower cover 29.

The tank cover 79 includes a first slope 74 and a second slope 75. The first slope 74 and the second slope 75 tilt up to laterally outward in a vehicle front view. When described in detail, the first slope 74 is the right lateral portion of the bottom surface of the tank cover 79. The first slope 74 tilts up to the right. The second slope 75 is the left lateral portion of the bottom surface of the tank cover 79. The second slope 75 tilts up to the left. The first slope 74 and the second slope 75 are located below the first cover attachment portion 72. The first slope 74 is located below the first lower frame 13. The second slope 75 is located below the second lower frame 14.

As shown in FIG. 4, a fuel port 76 is connected to the tank body 71. The fuel port 76 is a port to which a fuel pipe is fitted for supplying fuel to the tank body 71. The fuel port 76 protrudes from the tank body 71. In a vehicle front view, the fuel port 76 is located under the second lower frame 14. In the vehicle front view, the fuel port 76 is located roughly at the same height as the connection portion between the first lower frame 13 and the down frame 12.

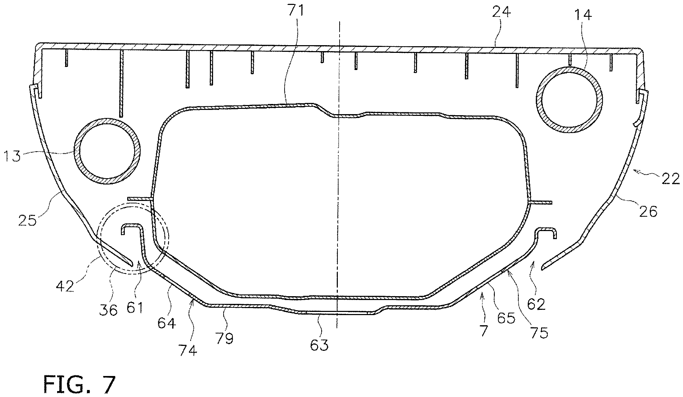

As shown in FIG. 6, the lower cover 22 is not disposed under at least a portion of the fuel tank 7. Thus, clearances are produced between the fuel tank 7 and the lower cover 22. FIG. 7 is a cross-sectional view of FIG. 6 taken along a line VII-VII. As shown in FIG. 7, a clearance 61 (hereinafter referred to as "a first opening 61") is produced between the fuel tank 7 and the first side lower cover 25. On the other hand, a clearance 62 (hereinafter referred to as "a second opening 62") is produced between the fuel tank 7 and the second side lower cover 26. The first opening 61 and the second opening 62 introduce travelling wind to the space between the fuel tank 7 and the vehicle body cover 6.

Further, the tank cover 79 includes a third opening 63. The third opening 63 is bored in the middle portion of the tank cover 79 in the vehicle width direction. Further, the tank cover 79 includes at least one fourth opening 64 and at least one fifth opening 65. The fourth opening 64 is bored in the first slope 74. The fifth opening 65 is bored in the second slope 75. The third to fifth openings 63 to 65 introduce travelling wind to the space between the tank body 71 and the tank cover 79. Travelling wind is introduced to the space between the fuel tank 7 and the vehicle body cover 6 through the space between the tank body 71 and the tank cover 79.

As described above, travelling wind is introduced through the first to fifth openings 61 to 65, and is accordingly introduced to the space between the fuel tank 7 and the first side lower cover 25 as shown in FIG. 3 (see a dashed dotted arrow A1 in FIG. 3). Likewise, travelling wind is introduced to the space between the fuel tank 7 and the second side lower cover 26 (see a dashed dotted arrow A2 in FIG. 3).

As shown in FIG. 1, the engine unit 8 is disposed rearward of the flat footboard 24 and the fuel tank 7. The engine unit 8 is of a so-called unit-swing type, and is pivotably supported by the vehicle body frame 2. The engine unit 8 is located under the seat 5. The engine unit 8 supports the rear wheel 9 in a rotatable state. The engine unit 8 includes an engine 31, a transmission 32, a cooling fan device 33, an exhaust pipe 34, a silencer 35 and a catalyst 36.

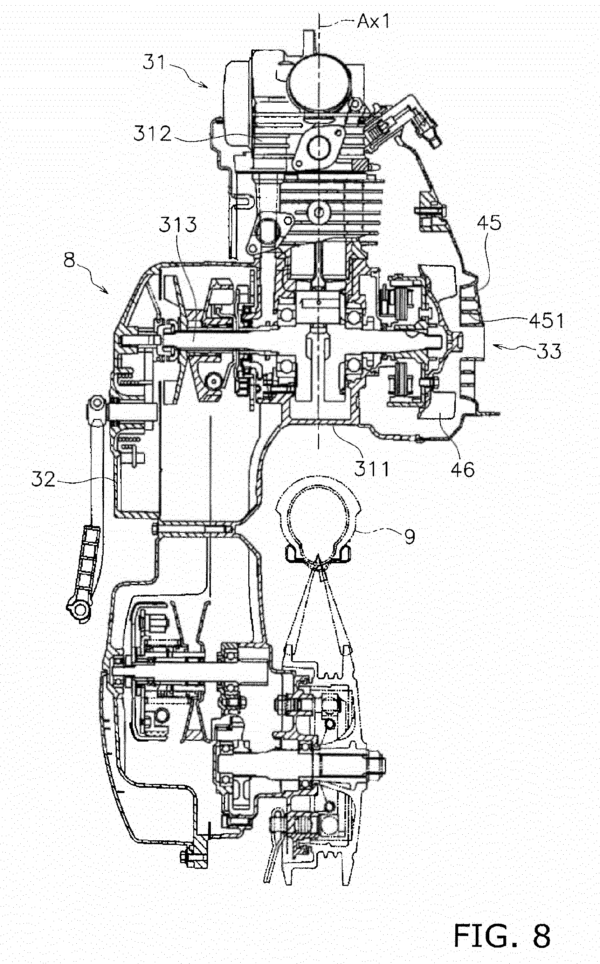

The engine 31 is an air-cooled engine. The engine 31 is disposed under the seat 5. FIG. 8 is a cross-sectional view of the engine unit 8. The engine 31 includes a crankcase 311 and a cylinder 312. The crankcase 311 accommodates a crankshaft 313. The rotational axis of the crankshaft 313 extends in the vehicle width direction. As shown in FIG. 2, the cylinder 312 is disposed forward of the crankcase 311. The cylinder 312 is disposed between the first rear frame 15 and the second rear frame 16, and partially protrudes forward of the first rear frame 15 and the second rear frame 16. A cylinder axis Ax1, which is the center axis of the cylinder 312, is disposed in a direction intersecting with the vertical direction. When described in detail, the cylinder axis Ax1 of the cylinder 312 obliquely tilts up to the front.

As shown in FIG. 2, the engine unit 8 is connected to the vehicle body frame 2 through a link mechanism 37. The engine unit 8 is disposed so as to be pivotable about a pivot center C1 located in a connection portion between the link mechanism 37 and the vehicle body frame 2. The pivot center C1 is located below the cylinder axis Ax1.

The transmission 32 is disposed laterally on one side of the crankcase 311, whereas the cooling fan device 33 is disposed laterally on the other side of the crankcase 311. In the present exemplary embodiment, the transmission 32 is disposed on the left side of the crankcase 311, whereas the cooling fan device 33 is disposed on the right side of the crankcase 311. The transmission 32 extends rearward from the position located laterally to the crankcase 311, and supports the rear wheel 9.

The cooling fan device 33 is configured to produce air stream for cooling down the engine 31. The cooling fan device 33 cools down the engine 31 by producing the air stream flowing in the surrounding of the engine 31. The cooling fan device 33 is disposed rearward of the first side lower cover 25. The cooling fan device 33 is disposed rearward of the first rear frame 15. The cooling fan device 33 includes a fan cover 45 and a cooling fan 46.

The fan cover 45 laterally covers the cooling fan 46. The cooling fan 46 is disposed so as to be rotatable about a rotational center C2. The fan cover 45 includes a grill portion 451 and an exhaust pipe cover portion 452. The grill portion 451 is disposed in a position opposed to the cooling fan 46. The exhaust pipe cover portion 452 laterally covers a portion of the exhaust pipe 34.

As shown in FIG. 2, the cylinder 312 includes an exhaust port 314 and an intake port 315. The exhaust port 314 is located below the intake port 315. The exhaust pipe 34 is connected to the exhaust port 314. The silencer 35 is connected to the exhaust pipe 34. The silencer 35 is disposed rearward of the cylinder 312. The silencer 35 is disposed laterally to the rear wheel 9, and overlaps with the rear wheel 9 in the vehicle side view. In the present exemplary embodiment, the silencer 35 is disposed on the right side of the rear wheel 9. The catalyst 36 is disposed within the exhaust pipe 34.

The exhaust pipe 34 includes a first exhaust pipe 41, a catalyst housing portion 42 and a second exhaust pipe 42. The first exhaust pipe 41 is a portion located upstream of the catalyst 36 in the flow of exhaust gas within the exhaust pipe 34, and is connected to the exhaust port 314. The exhaust port 314 is disposed on the lateral surface of the cylinder 312. The first exhaust pipe 41 downwardly protrudes from the exhaust port 314 and bends rearward. The first exhaust pipe 41 is disposed so as to run laterally to the link mechanism 37.

The catalyst housing portion 42 accommodates the catalyst 36. The outer diameter of the catalyst housing portion 42 is greater than that of the first exhaust pipe 41. Further, the outer diameter of the catalyst housing portion 42 is greater than that of the second exhaust pipe 43. The catalyst housing portion 42 is connected to the first exhaust pipe 41 and extends rearward. The catalyst housing portion 42 is located below the cylinder axis Ax1. As shown in FIGS. 4 and 7, the catalyst housing portion 42 is partially disposed rearward of the space produced between the fuel tank 7 and the first side lower cover 25. It should be noted that in FIG. 4, a dashed two-dotted line depicts a portion of the rear edge of the first side lower cover 25. In FIG. 7, dashed two-dotted lines depict the outer contour of the catalyst housing portion 42 and that of the catalyst 36, both of which are cross-sectioned along the front end portion of the catalyst 36.

The second exhaust pipe 43 is a portion located downstream of the catalyst 36. The second exhaust pipe 43 is connected to the catalyst housing portion 42 and backwardly extends from the rear end of the catalyst housing portion 42. The second exhaust pipe 43 is disposed between the catalyst housing portion 42 and the silencer 35 and is connected to the silencer 35.

As shown in FIG. 5, the catalyst housing portion 42 does not overlap with the first side lower cover 25 in the vehicle side view. Thus, the catalyst housing portion 42 is entirely exposed to the outside in the vehicle side view. The first side cover 25 includes a recess 251 formed by forwardly recessing the rear portion thereof. The catalyst housing portion 42 is disposed rearward of the recess 251 in the vehicle side view.

The catalyst housing portion 42 is partially located laterally to the link mechanism 37. Thus, the catalyst housing portion 42 partially overlaps with the link mechanism 37 in the vehicle side view.

The catalyst housing portion 42 overlaps with the front seat portion 5a in the back-and-forth direction of the vehicle. In other words, the catalyst housing portion 42 is located under the front seat portion 5a in the vehicle side view. The catalyst housing portion 42 is located rearward of the front end of the front seat portion 5a. The catalyst housing portion 42 is located forward of the rear end of the front seat portion 5a. The catalyst housing portion 42 is located laterally to the engine 31. When described in detail, the catalyst housing portion 42 is located laterally to the crankcase 311. The catalyst housing portion 42 is located forward of the rotational center C2 of the cooling fan device 33. The catalyst housing portion 42 is located below the rotational center C2 of the cooling fan device 33.

The cooling fan device 33 and the catalyst housing portion 42 are disposed laterally on the same side with respect to a vehicle center line C3 extending in the back-and-forth direction of the vehicle. In the present exemplary embodiment, the cooling fan device 33 and the catalyst housing portion 42 are disposed on the right side of the vehicle center line C3 extending in the vehicle back-and-forth direction. The catalyst housing portion 42 is partially disposed under the cooling fan device 33. The second exhaust pipe 43 is disposed so as to run under the cooling fan device 33. The catalyst housing portion 42 partially overlaps with the first rear frame 15 in the vehicle bottom view. The catalyst housing portion 42 is partially located inward of the first rear frame 15 in the vehicle width direction. The catalyst housing portion 42 is also partially located inward of the first lower frame 13 in the vehicle width direction.

It should be noted that in the present exemplary embodiment, the expression "inward in the vehicle width direction" means a direction toward the vehicle center line C3 that passes through the vehicle center in the vehicle width direction and extends in the vehicle back-and-forth direction. Contrarily, the expression "outward in the vehicle width direction" means a direction opposite to the direction indicated by the expression "inward in the vehicle width direction". In other words, the expression "outward in the vehicle width direction" means a direction away from the vehicle center line C3 that passes through the vehicle center in the vehicle width direction and extends in the vehicle back-and-forth direction.

As shown in FIG. 4, the first exhaust pipe 41 partially overlaps with the fuel tank 7 in the vehicle front view. The first slope 74 partially overlaps with the catalyst housing portion 42 in the vehicle front view. The inner lateral portion of the catalyst housing portion 42 overlaps with the fuel tank 7 in the vehicle front view. The catalyst housing portion 42 is located under the first lower frame 13 in the vehicle front view.

It should be noted that the aforementioned positional arrangement of the elements (e.g., the catalyst housing portion 42) composing the engine unit 8 is only required to be established at least partially within the pivot range of the engine unit 8. For example, the aforementioned positional arrangement of the elements (e.g., the catalyst housing portion 42) composing the engine unit 8 indicates the one produced in a condition that the saddle-riding vehicle 1 stands still upright without a rider riding thereon while the front wheel 4 and the rear wheel 9 make contact with the horizontal ground.

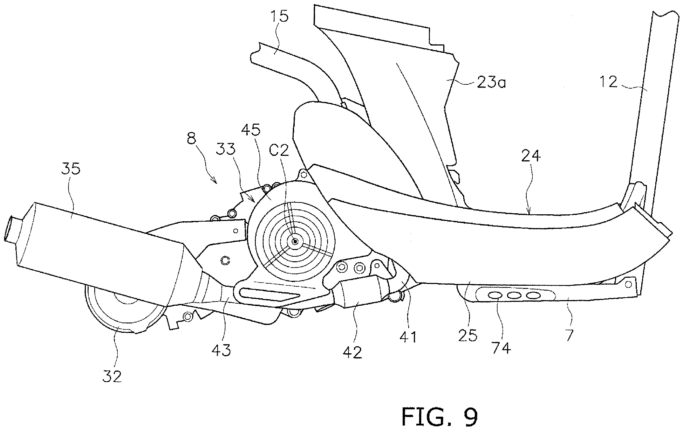

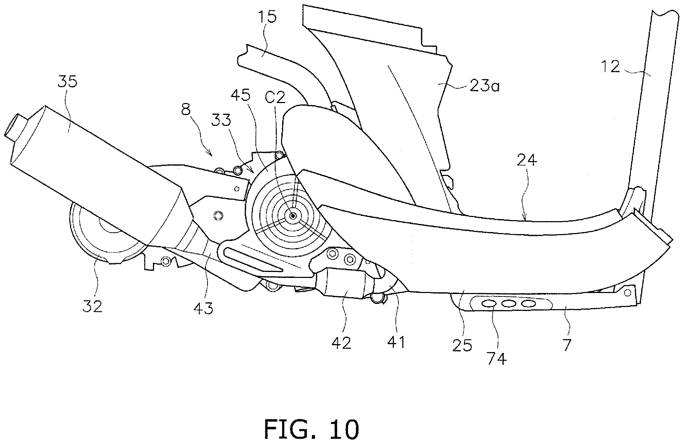

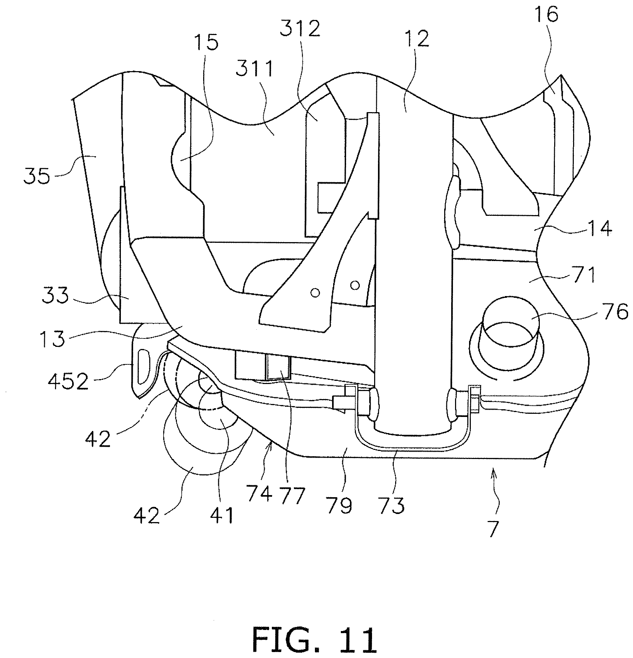

FIG. 9 is a diagram showing a condition that the engine unit 8 is located in the lowest position within the pivot range thereof. FIG. 10 is a diagram showing a condition that the engine unit 8 is located in the highest position within the pivot range thereof. FIG. 11 is a partial front view of the vehicle body frame 2 and the engine unit 8. In FIG. 11, solid lines depict the catalyst housing portion 42 in the condition that the engine unit 8 is located in the lowest position within the pivot range thereof, whereas dashed two-dotted lines depict the catalyst housing portion 42 in the condition that the engine unit 8 is located in the highest position within the pivot range thereof.

The catalyst housing portion 42 is partially located above the rear end of the bottom portion of the first side lower cover 25 in both of the condition that the engine unit 8 is located in the lowest position within the pivot range thereof and the condition that the engine unit 8 is located in the highest position within the pivot range thereof. Therefore, the catalyst housing portion 42 is partially disposed rearward of the space produced between the fuel tank 7 and the first side lower cover 25 in both of the condition that the engine unit 8 is located in the lowest position within the pivot range thereof and the condition that the engine unit 8 is located in the highest position within the pivot range thereof. In other words, the catalyst housing portion 42 is partially disposed rearward of the space produced between the fuel tank 7 and the first side lower cover 25 in the entire pivot range thereof.

As shown in FIGS. 9 and 11, the catalyst housing portion 42 is partially located below the bottom surface of the fuel tank 7 in the condition that the engine unit 8 is located in the lowest position within the pivot range thereof. As shown in FIG. 11, in the vehicle front view, the first slope 74 partially overlaps with the first exhaust pipe 41 in the condition that the engine unit 8 is located in the lowest position within the pivot range thereof. As shown in FIGS. 10 and 11, the catalyst housing portion 42 is entirely located above the bottom surface of the fuel tank 7 in the condition that the engine unit 8 is located in the highest position within the pivot range thereof.

In the aforementioned saddle-riding vehicle 1 according to the present exemplary embodiment, the catalyst 36 is disposed as upstream as possible within the exhaust pipe 34. Thus, the catalyst 36 can be quickly activated by speeding up increase in temperature of the catalyst 36 after stating of the engine 31. Further, after activated, the catalyst 36 can be cooled down by travelling wind flowing between the fuel tank 7 and the first side lower cover 25 during travelling of the vehicle. Therefore, thermal effect on the foot of the rider can be reduced even when the catalyst 36 is disposed as upstream as possible within the exhaust pipe 34 and is thereby disposed in a position immediately below the front seat portion 5a. Further, thermal effect on the fuel tank 7 can be reduced even when the catalyst 36 is disposed close to the fuel tank 7 disposed under the flat footboard 24.

The catalyst housing portion 42 is at least partially disposed rearward of the space produced between the fuel tank 7 and the first side lower cover 25 in the entire pivot range of the catalyst housing portion 42. Thus, the catalyst 36 can be always located in a position frequently receiving travelling wind. It should be noted that the catalyst housing portion 42 is only required to be at least partially disposed rearward of the space produced between the fuel tank 7 and the first side lower cover 25 in at least a portion of the pivot range of the catalyst housing portion 42.

The inner lateral portion of the catalyst housing portion 42 overlaps with the fuel tank 7 in the vehicle front view. Thus, the catalyst housing portion 42 can be disposed closer to the vehicle center line C3 than that entirely disposed outward of the fuel tank 7 in the vehicle width direction. Accordingly, thermal effect on the foot of the rider can be reduced when the rider puts his/her feet on the ground while the vehicle stands still. Incidentally, travelling wind is unlikely to reach the inner lateral portion of the catalyst housing portion 42 that overlaps with the fuel tank 7. However, the catalyst housing portion 42 is sufficiently cooled down. Hence, thermal effect on the fuel tank 7 can be reduced. Especially, the outer lateral portion of the catalyst housing portion 42 can be sufficiently cooled down. Hence, thermal effect on the foot of the rider can be reduced.

The first slope 74 of the fuel tank 7 partially overlaps with the catalyst housing portion 42 in the vehicle front view. Thus, the first slope 74 guides travelling wind to the catalyst housing portion 42. Cooling performance of the catalyst 36 can be thereby enhanced.

The first slope 74 partially overlaps with the first exhaust pipe 41 in the vehicle front view. Thus, the first slope 74 guides travelling wind to the first exhaust pipe 41. Cooling performance of the catalyst 36 can be thereby further enhanced.

The catalyst housing portion 42 is located forward of the rotational center C2 of the cooling fan device 33. Thus, the catalyst 36 can be cooled down by air stream produced by the cooling fan device 33. Cooling performance of the catalyst 36 can be thereby further enhanced.

The cooling fan device 33 and the catalyst housing portion 42 are disposed laterally on the same side with respect to the vehicle center line C3 extending in the vehicle back-and-forth direction. Thus, the catalyst 36 can be cooled down by air stream produced by the cooling fan device 33. Cooling performance of the catalyst 36 can be thereby further enhanced.

The first side lower cover 25 extends to a position rearward of the fuel tank 7. However, the catalyst housing portion 42 does not overlap with the first side lower cover 25 in the vehicle side view. Thus, the catalyst housing portion 42 is exposed to the outside. Cooling performance of the catalyst 36 can be thereby further enhanced.

The catalyst housing portion 42 is partially located laterally to the link mechanism 37. Thus, the catalyst housing portion 42 can be disposed as upstream as possible and the lowest ground height can be reliably set to be high in comparison with that disposed under the link mechanism 37.

The catalyst housing portion 42 is partially located below the bottom surface of the fuel tank 7, while the engine unit 8 is located in the lowest position within the pivot range thereof. Thus, travelling wind is likely to reach the catalyst housing portion 42. Cooling performance of the catalyst 36 can be thereby further enhanced.

The catalyst housing portion 42 is partially located under the first lower frame 13 in the vehicle front view. Thus, the first lower frame 13 guides travelling wind to the catalyst housing portion 42. Cooling performance of the catalyst 36 can be thereby further enhanced.

One exemplary embodiment of the present teaching has been explained above. However, the present teaching is not limited to the aforementioned exemplary embodiment, and a variety of changes can be made.

The saddle-riding vehicle of the present teaching is not limited to the motorcycle, and may be travelling vehicle for irregular terrain (an all-terrain vehicle) or a snowmobile.

The engine 31 is not limited to be the air-cooled engine, and alternatively, may be a water-cooled engine. In the structure, the cooling fan device 33 is not limited to a forced air-cooled fan, and alternatively, may be a water-cooled radiator fan. Further, the cylinder axis Ax1 of the engine 31 may be horizontally disposed. Yet further, the cooling fan device 33 may not be provided.

In the aforementioned exemplary embodiment, the catalyst housing portion 42 is disposed on the right side of the center line C3 of the saddle-riding vehicle 1 extending in the vehicle back-and-forth direction. However, the catalyst housing portion 42 may be disposed on the left side of the center line C3. In the structure, similarly to the catalyst housing portion 42, the cooling fan device 33 and the silencer 35 are preferably disposed on the left side of the center line C3. The positions of the first side lower cover 25 and the second side lower cover 26 may be bilaterally reversed from those of the aforementioned exemplary embodiment. Likewise, the positions of the first lower frame 13 and the second lower frame 14 may be bilaterally reversed from those of the aforementioned exemplary embodiment.

Not the entirety but only a portion of the engine unit 8 may located under the seat 5. Further, not a portion but the entirety of the first exhaust pipe 41 may overlap with the fuel tank 7 in the vehicle front view. Yet further, not a portion but the entirety of the catalyst housing portion 42 may be disposed rearward of the space produced between the fuel tank 7 and the vehicle body cover 6.

Not a portion but the entirety of the first slope 74 may overlap with the catalyst housing portion 42 in the vehicle front view. Further, not a portion but the entirety of the first slope 74 may overlap with the first exhaust pipe 41 in the vehicle front view.

Not the entirety but only a portion of the catalyst housing portion 42 may be located forward of the rotational center C2 of the cooling fan device 33. In other words, the front end of the catalyst housing portion 42 may be located forward of the rotational center C2 of the cooling fan device 33, while the rear end of the catalyst housing portion 42 may be located rearward of the rotational center C2 of the cooling fan device 33.

Not the entirety but only a portion of the catalyst housing portion 42 may not overlap with the first side lower cover 25 in the vehicle side view. In other words, not the entirety but only a portion of the catalyst housing portion 42 may be exposed to the outside in the vehicle side view. Further, not a portion but the entirety of the catalyst housing portion 42 may be located laterally to the link mechanism 37.

Not a portion but the entirety of the catalyst housing portion 42 may be disposed rearward of the space produced between the fuel tank 7 and the vehicle body cover 6 in the entire pivot range of the catalyst housing portion 42. Further, not a portion but the entirety of the catalyst housing portion 42 may be located below the bottom surface of the fuel tank 7 in the condition that the engine unit 8 is located in the lowest position within the pivot range thereof. Yet further, not the entirety but only a portion of the catalyst housing portion 42 may be located under the lower frames 13 and 14 in the vehicle front view. Moreover, the catalyst housing portion 42 may be at least partially disposed rearward of the space produced between the fuel tank 7 and the vehicle body cover 6 only in a portion of the pivot range of the catalyst housing portion 42.

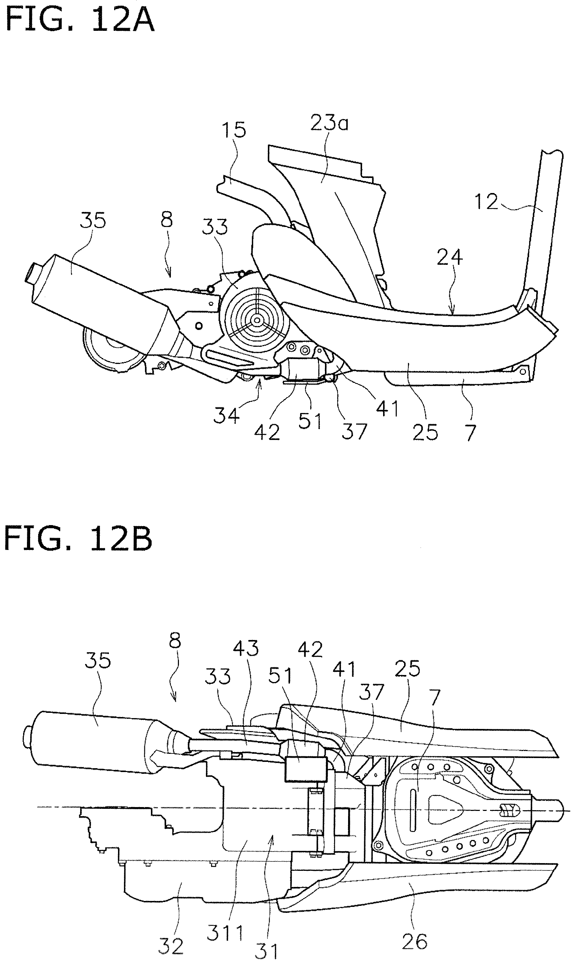

The saddle-riding vehicle 1 may include a protection member. For example, FIG. 12A is a partial side view of a saddle-riding vehicle according to a first modification. FIG. 12B is a partial bottom view of the saddle-riding vehicle according to the first modification. As shown in FIGS. 12A and 12B, a protection member 51 is disposed under the catalyst housing portion 42. The protection member 51 is attached to the link mechanism 37. In the structure, the protection member 51 can protect the catalyst housing portion 42 from obstacles such as a stone.

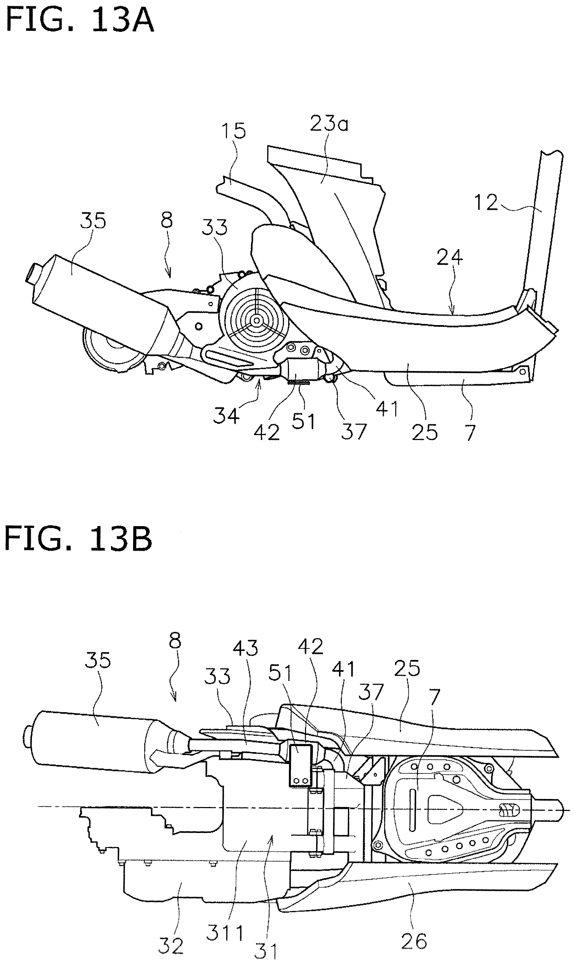

The protection member 51 may be attached to another member other than the link mechanism 37. For example, FIG. 13A is a partial side view of a saddle-riding vehicle according to a second modification. FIG. 13B is a partial bottom view of the saddle-riding vehicle according to the second modification. As shown in FIGS. 13A and 13B, the protection member 51 is attached to the engine 31. When described in detail, the protection member 51 is attached to the crankcase 311.

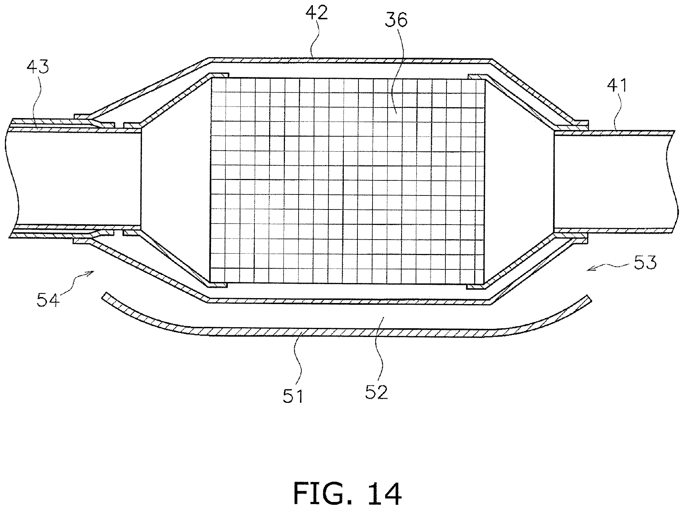

A wind guide path may be produced between the protection member 51 and the catalyst housing portion 42. For example, as shown in FIG. 14, the protection member 51 and the catalyst housing portion 42 produce therebetween a wind guide path 52, a first opening 53 and a second opening 54. The first opening 53 is located forward of the wind guide path 52 and communicates with the external space. The second opening 54 is located rearward of the wind guide path 52 and communicates with the external space. The structure causes travelling wind to flow into the first opening 53, flow through the wind guide path 52, and flow out of the second opening 54. The catalyst 36 can be thereby cooled down. Thus, cooling performance of the catalyst 36 can be further enhanced.

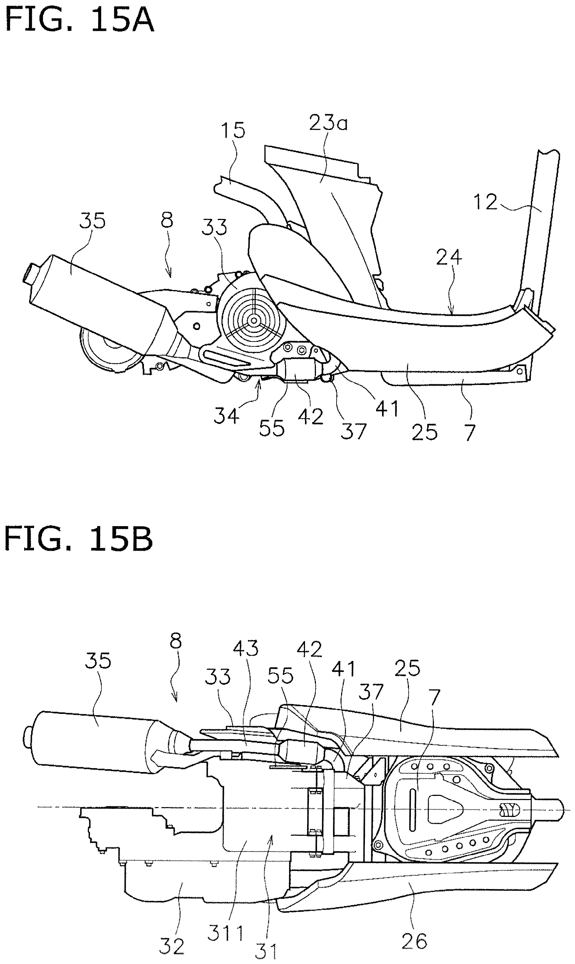

The engine 31 may include a rib for protecting the catalyst housing portion 42. For example, FIG. 15A is a partial side view of a saddle-riding vehicle according to a fourth modification. FIG. 15B is a partial bottom view of the saddle-riding vehicle according to the fourth modification. As shown in FIGS. 15A and 15B, a rib 55 extends from the engine 31 to a position below the catalyst housing portion 42. Specifically, the rib 55 is disposed on the crankcase 311. The rib 55 extends laterally to and along the catalyst housing portion 42 in the back-and-forth direction. In the structure, the rib 55 can protect the catalyst housing portion 42 from a stone and so forth located under the catalyst housing portion 42.

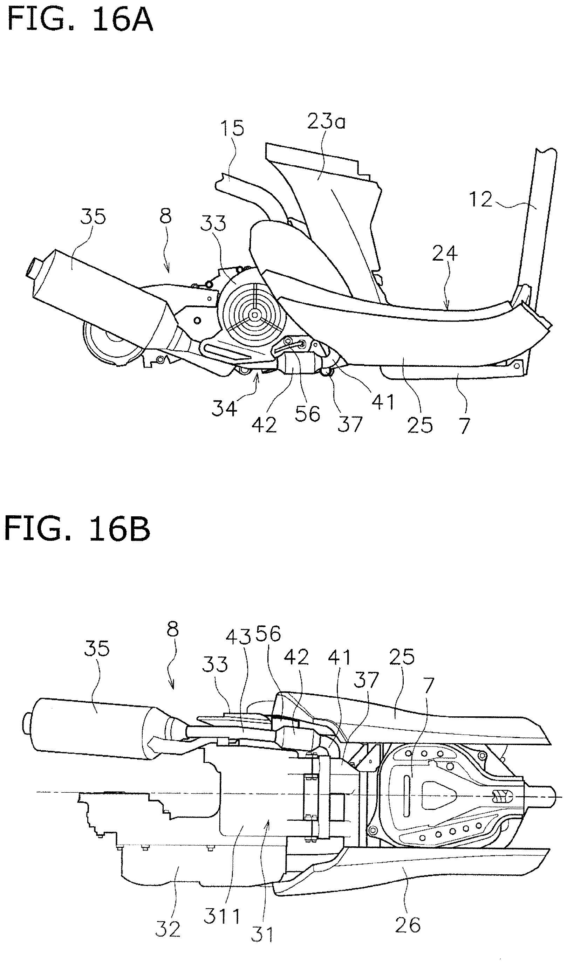

The engine unit 8 may include an engine heat insulation member. For example, FIG. 16A is a partial side view of a saddle-riding vehicle according to a fifth modification. FIG. 16B is a partial bottom view of the saddle-riding vehicle according to the fifth modification. As shown in FIGS. 16A and 16B, an engine heat insulation member 56 is disposed between the cooling fan device 33 and the catalyst housing portion 42. The engine heat insulation member 56 is disposed over the catalyst housing portion 42. The engine heat insulation member 56 is connected to the fan cover 45 of the cooling fan device 33. When it is intended to enhance the cooling performance of the cooling fan device 33, the engine heat insulation member 56 thus disposed can inhibit heat of the catalyst 36 from being transferred to cooling wind produced by the cooling fan device 33.

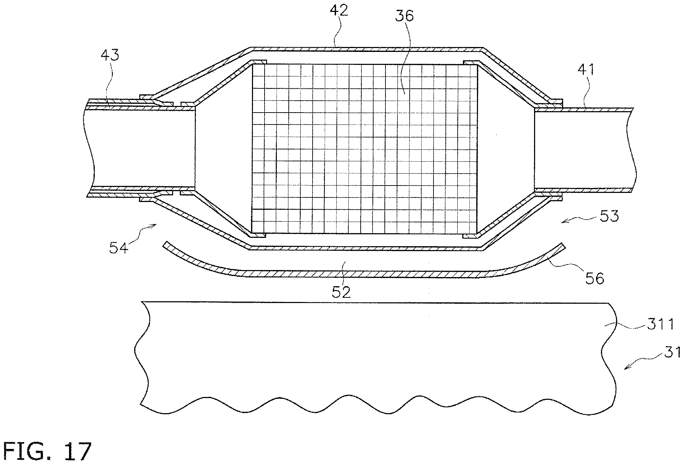

FIG. 17 is a partial bottom view of a saddle-riding vehicle according to a sixth modification. As shown in FIG. 17, the engine heat insulation member 56 may be disposed between the engine 31 and the catalyst housing portion 42. The engine heat insulation member 56 is disposed laterally to the catalyst housing portion 42. The engine heat insulation member 56 is disposed between the crankcase 311 and the catalyst housing portion 42 in the vehicle width direction. The engine heat insulation member 56 and the catalyst housing portion 42 produce therebetween the wind guide path 52, the first opening 53 and the second opening 54. The first opening 53 is located forward of the wind guide path 52 and communicates with the external space. The second opening 54 is located rearward of the wind guide path 52 and communicates with the external space.

In the structure, the engine heat insulation member 56 can inhibit heat of the catalyst 36 from being transferred to the engine 31. Further, the structure causes travelling wind to flow into the first opening 53, flow through the wind guide path 52, and flow out of the second opening 54. The catalyst 36 can be thereby cooled down. Thus, cooling performance of the catalyst 36 can be further enhanced.

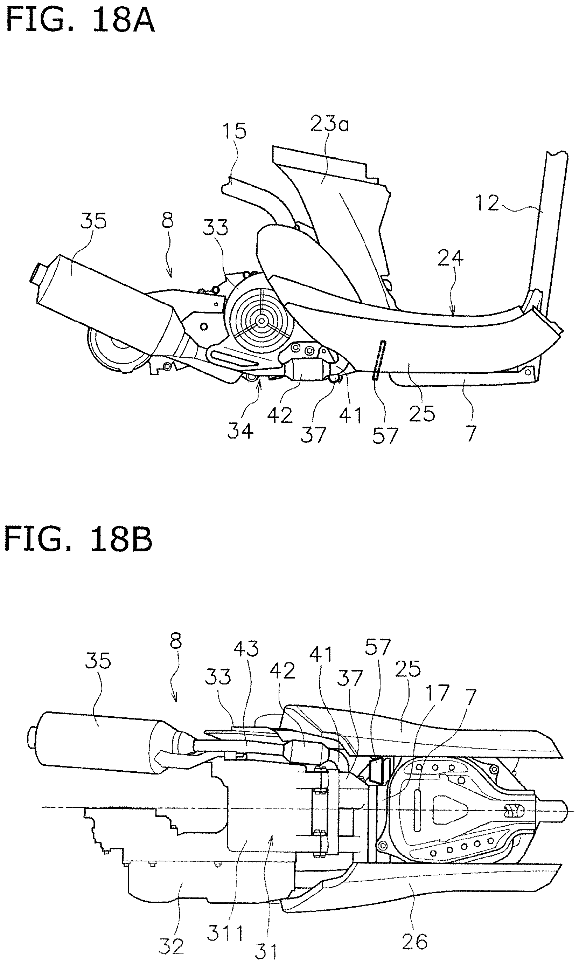

The saddle-riding vehicle of the present teaching may include a fuel tank heat insulation member. The fuel tank heat insulation member is disposed between the fuel tank 7 and the catalyst housing portion 42. For example, FIG. 18A is a partial side view of a saddle-riding vehicle according to a seventh modification. FIG. 18B is a partial bottom view of the saddle-riding vehicle according to the seventh modification. As shown in FIGS. 18A and 18B, a fuel tank heat insulation member 57 is attached to the first coupling frame 17. The fuel tank heat insulation member 57 is disposed rearward of the fuel tank 7, while being disposed forward of the catalyst housing portion 42. The structure can inhibit heat of the catalyst 36 from being transferred to the fuel tank 7.

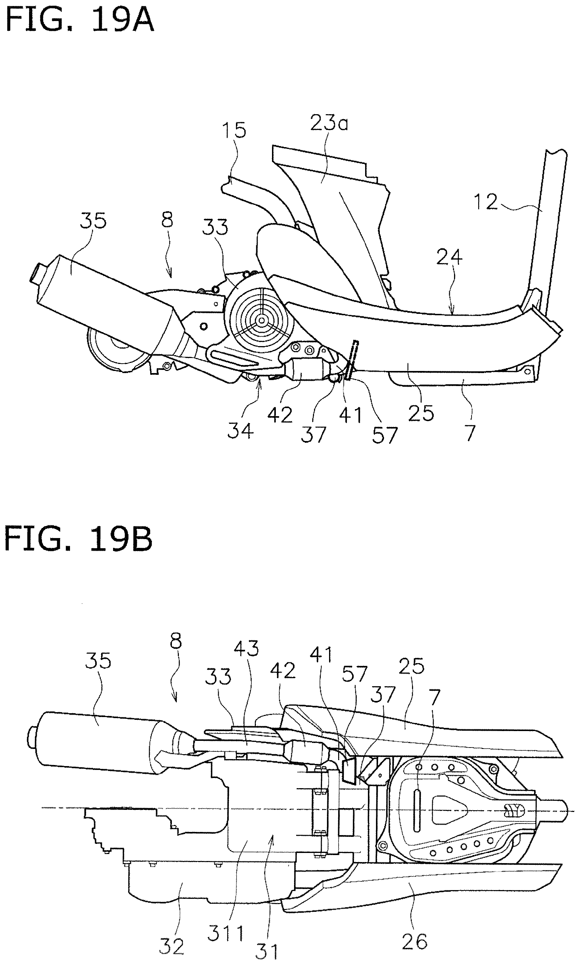

The fuel tank heat insulation member 57 may be attached to another portion other than the first coupling frame 17. For example, FIG. 19A is a partial side view of a saddle-riding vehicle according to an eighth modification. FIG. 19B is a partial bottom view of the saddle-riding vehicle according to the eighth modification. As shown in FIGS. 19A and 19B, the fuel tank heat insulation member 57 is attached to the link mechanism 37.

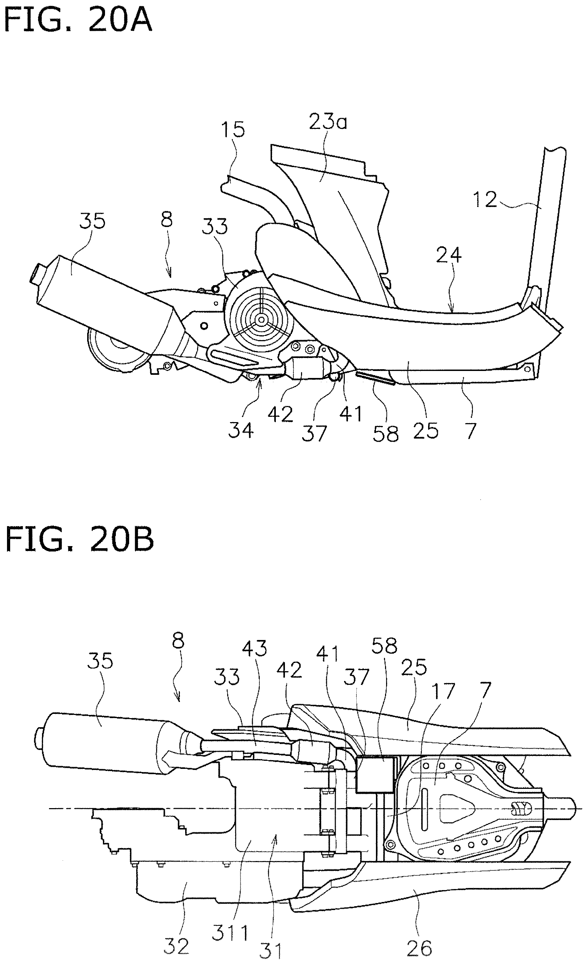

The saddle-riding vehicle of the present teaching may include a wind guide member. For example, FIG. 20A is a partial side view of a saddle-riding vehicle according to a ninth modification. FIG. 20B is a partial bottom view of the saddle-riding vehicle according to the ninth modification. As shown in FIGS. 20A and 20B, a wind guide member 58 is disposed between the fuel tank 7 and the catalyst housing portion 42, and guides travelling wind, flowing under the fuel tank 7, to flow toward the catalyst housing portion 42. The wind guide member 58 is a plate member and is disposed along a direction from the bottom portion of the fuel tank 7 toward the catalyst housing portion 42. The wind guide member 58 is attached to the first coupling frame 17. In the structure, the catalyst 36 can be cooled down by guiding travelling wind, flowing under the fuel tank 7, to flow toward the catalyst housing portion 42 with the wind guide member 58. Thus, cooling performance of the catalyst 36 can be further enhanced. It should be noted that the wind guide member 58 may be attached to another member other than the first coupling frame 17. For example, the wind guide member 58 may be attached to the link mechanism 37.

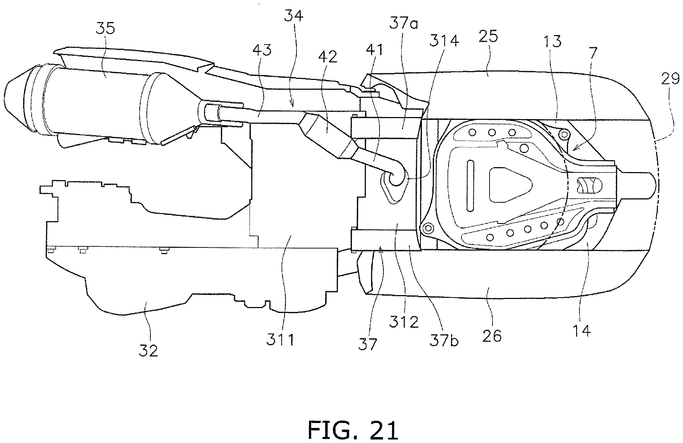

The catalyst housing portion 42 may be at least partially located rearward of the link mechanism 37. For example, FIG. 21 is a partial bottom view of a saddle-riding vehicle according to a tenth modification. As shown in FIG. 21, the catalyst housing portion 42 may be partially located rearward of the link mechanism 37. The link mechanism 37 includes a first link portion 37a and a second link portion 37b. The first link portion 37a and the second link portion 37b are separately disposed right and left. The exhaust port 314 is located between the first link portion 37a and the second link portion 37b in the vehicle bottom view. The first exhaust pipe 41 runs between the first link portion 37a and the second link portion 37b and then bends rearward. The catalyst housing portion 42 extends rearward. The catalyst housing portion 42 is located under the crankcase 311. Similarly to the aforementioned exemplary embodiment, in the structure, the catalyst housing portion 42 can be disposed as upstream as possible and the lowest ground height can be reliably set to be high. It should be noted that not a portion but the entirety of the catalyst housing portion 42 may be located rearward of the link mechanism 37.

The vehicle body cover 6 is not limited to have a specific shape as long as the catalyst housing portion 42 is at least partially located between the fuel tank 7 and the vehicle body cover 6 in the vehicle width direction. In other words, the vehicle body cover 6 may have any shape as long as the vehicle body cover 6 can guide wind, flowing between the fuel tank 7 and the vehicle body cover 6, to flow toward the catalyst housing portion 42.

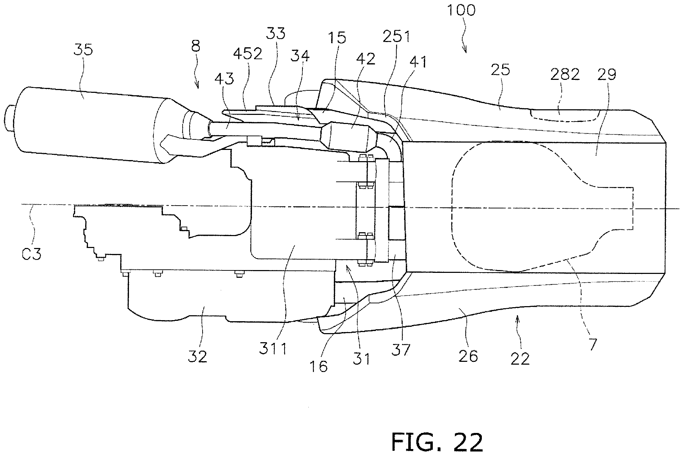

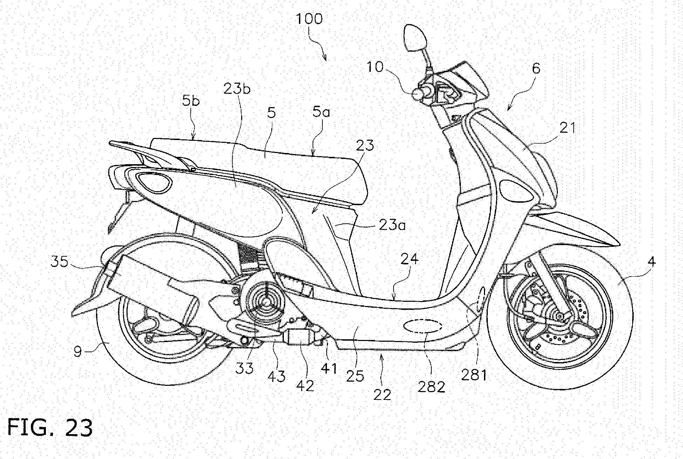

In the aforementioned exemplary embodiment, the lower cover 22 includes the first and second openings 61 and 62 bored in the bottom surface thereof, whereas the tank cover 79 includes the third to fifth openings 63 to 65 bored therein. However, the openings may be bored in other portions. For example, FIG. 22 is a partial bottom view of a saddle-riding vehicle 100 according to an eleventh modification. As shown in FIG. 22, the lower cover 22 includes a bottom surface cover 29. The bottom surface cover 29 covers the fuel tank 7 from below. FIG. 23 is a side view of the saddle-riding vehicle 100 according to the eleventh modification. As shown in FIG. 23, an opening 281 may be bored in a portion of the front cover 21, i.e., a portion located rearward of the front wheel 4. Alternatively, an opening 282 may be bored in the first side lower cover 25. Yet alternatively, both of the openings 281 and 282 may be bored. Yet further alternatively, each of the opening or openings may be a clearance produced between overlapping portions of discrete members. It should be noted that each of the opening or openings is only required to be at least partially located forward of the rear end of the lateral portion of the fuel tank 7.

In the aforementioned exemplary embodiment, the fuel tank 7 includes the tank body 71 and the tank cover 79. However, the fuel tank 7 may not include the tank cover 79.

## Claims

1. A saddle-riding vehicle comprising:
a vehicle body frame (2);
a seat (5) being supported by the vehicle body frame (2);
a flat footboard (24) being disposed forward of and below the seat (5);
a fuel tank (7) being disposed under the flat footboard (24);
a vehicle body cover (6) being disposed laterally to the fuel tank (7); and
an engine unit (8) being disposed rearward of the flat footboard (24) and the fuel tank (7) and being pivotably supported by the vehicle body frame (2), wherein
the engine unit (8) is at least partially located under the seat (5),
the engine unit (8) includes:
an engine (31) including an exhaust port (314),
an exhaust pipe (34) being connected to the exhaust port (314),
a silencer (35) being connected to the exhaust pipe (34), and
a catalyst (36),
the exhaust pipe (34) includes:
a first exhaust pipe (41) being located upstream of the catalyst (36) and being connected to the exhaust port (314), and a second exhaust pipe (43) being connected to the silencer (35),
the first exhaust pipe (41) at least partially overlaps with the fuel tank (7) in a vehicle front view, **characterized by**
an opening (61,62) for introducing travelling wind to a space between the fuel tank (7) and the vehicle body cover (6), wherein
the catalyst (36) is disposed within the exhaust pipe (34), the exhaust pipe (34) further includes a catalyst housing portion (42) accommodating the catalyst (36), the catalyst housing portion (42) being connected to the first exhaust pipe (41) and backwardly extending from the first exhaust pipe (41),
the second exhaust pipe (43) is located downstream of the catalyst (36), and connected to the catalyst housing portion (42), backwardly extending from the catalyst housing portion (42), and
the catalyst housing portion (42) is at least partially disposed rearward of the space
between the fuel tank (7) and the vehicle body cover (6) so that the catalyst (36) can be
cooled down by travelling wind flowing between the fuel tank (7) and the vehicle body cover (6) during travelling of the vehicle.

2. A saddle-riding vehicle according to claim 1, **characterized in that** a cylinder axis (Ax1) of the engine (31) is disposed in a direction intersecting with a vertical direction,
a pivot center (C1) of the engine unit (8) and the catalyst housing portion (42) are located below the cylinder axis (Ax1), and
the catalyst housing portion (42) is at least partially disposed rearward of the space between the fuel tank (7) and the vehicle body cover (6) in an entire pivot range of the catalyst housing portion (42).

3. A saddle-riding vehicle according to claim 1 or 2, **characterized in that** the seat (5) includes a front seat portion (5a) on which a rider can seat, the catalyst housing portion (42) is located under the front seat portion (5a) in a vehicle side view,
the catalyst housing portion (42) is at least partially exposed in the vehicle side view, and
the catalyst housing portion (42) overlaps at an inner lateral portion thereof with the fuel tank (7) in the vehicle front view.

4. A saddle-riding vehicle according to any of claims 1 to 3, **characterized in that** the fuel tank (7) includes a slope (74) tilting up to a laterally outward in the vehicle front view, and
the slope (74) at least partially overlaps with the catalyst housing portion (42) in the vehicle front view, wherein the slope (74) at least partially overlaps with the first exhaust pipe (41) in the vehicle front view.

5. A saddle-riding vehicle according to any of claims 1 to 4, **characterized in that** the engine unit (8) further includes a cooling fan device (33), and
the catalyst housing portion (42) is at least partially located forward of a rotational center (C2) of the cooling fan device (33), or
wherein the engine unit (8) further includes a cooling fan device (33), and
the cooling fan device (33) and the catalyst housing portion (42) are disposed laterally on the same side with respect to a vehicle center line extending in a vehicle back-and-forth direction.

6. A saddle-riding vehicle according to any of claims 1 to 5, **characterized in that** the vehicle body cover (6) extends to a position rearward of the fuel tank (7), and
the catalyst housing portion (42) does not at least partially overlap with the vehicle body cover (6) in a vehicle side view.

7. A saddle-riding vehicle according to any of claims 1 to 6, **characterized by:**
a link mechanism (37) connecting the engine unit (8) and the vehicle body frame (2),
wherein the catalyst housing portion (42) is at least partially located laterally to the link mechanism (37), or
further comprising:
a link mechanism (37) connecting the engine unit (8) and the vehicle body frame (2), wherein
the catalyst housing portion (42) is at least partially located rearward of the link mechanism (37) in a vehicle bottom view.

8. A saddle-riding vehicle according to any of claims 1 to 7, **characterized by:**
a protection member (51) being disposed under the catalyst housing portion (42).

9. A saddle-riding vehicle according to claim 8, **characterized by:**
a link mechanism (37) connecting the engine unit (8) and the vehicle body frame (2), wherein
the protection member (51) is attached to the link mechanism (37), or
wherein the protection member (51) is attached to the engine (31).

10. A saddle-riding vehicle according to any of claims 8 or 9, **characterized in that** the protection member (51) and the catalyst housing portion (42) produce therebetween a wind guide path (52), a first opening (53) and a second opening (54), the first opening (53) being located forward of the wind guide path (52) and communicating with an external space, the second opening (54) being located rearward of the wind guide path (52) and communicating with the external space.

11. A saddle-riding vehicle according to any of claims 1 to 7, **characterized in that** the engine (31) includes a rib (55) extending to a position below the catalyst housing portion (42).

12. A saddle-riding vehicle according to any of claims 1 to 7, **characterized in that** the engine unit (8) further includes:
a cooling fan device (33) being disposed laterally to the engine (31), and
an engine heat insulation member (56) being disposed between the cooling fan device (33) and the catalyst housing portion (42), or
wherein the engine unit (8) further includes an engine heat insulation member (56) disposed between the engine (31) and the catalyst housing portion (42).

13. A saddle-riding vehicle according to claim 12, **characterized in that** the engine heat insulation member (56) and the catalyst housing portion (42) produce therebetween a wind guide path (52), a first opening (53) and a second opening (54), the first opening (53) being located forward of the wind guide path (52) and communicating with an external space, the second opening (54) being located rearward of the wind guide path (52) and communicating with the external space.

14. A saddle-riding vehicle according to any of claims 1 to 13, **characterized by:**
a fuel tank heat insulation member (57) being disposed between the fuel tank (7) and the catalyst housing portion (42).

15. A saddle-riding vehicle according to any of claims 1 to 14, **characterized by:**
a wind guide member (58) for guiding travelling wind flowing under the fuel tank (7) to flow toward the catalyst housing portion (42), the wind guide member (58) being disposed between the fuel tank (7) and the catalyst housing portion (42).

16. A saddle-riding vehicle according to any of claims 1 to 15, **characterized in that** the catalyst housing portion (42) is at least partially located below a bottom surface of the fuel tank (7) while the engine unit (8) is located in the lowest position within a pivot range thereof.

17. A saddle-riding vehicle according to any of claims 1 to 16, **characterized in that** the vehicle body frame (2) includes a lower frame (13,14), the lower frame (13,14) running under the flat footboard (24) and extending rearward, and
the catalyst housing portion (42) is at least partially located under the lower frame (13,14) in the vehicle front view.

## Patentansprüche

1. Ein Sattel-Reit-Fahrzeug, das umfasst:
einen Fahrzeug-Körper-Rahmen (2);
einen Sitz (5), der durch den Fahrzeug-Körper-Rahmen (2) gelagert ist;
ein flaches Fußbrett (24), das vor und unterhalb des Sitzes (5) positioniert ist;
einen Kraftstoff-Tank (7), der unter dem flachen Fußbrett (24) positioniert ist;
eine Fahrzeug-Körper-Abdeckung (6), die quer zu dem Kraftstoff-Tank (7) positioniert ist; und
eine Motoreinheit (8), die hinter dem flachen Fußbrett (24) und dem Kraftstoff-Tank (7) positioniert ist und die schwenkbar durch den Fahrzeug-Körper-Rahmen (2) gelagert ist, wobei
die Motoreinheit zumindest teilweise unter dem Sitz (5) angeordnet ist;
die Motoreinheit (8) beinhaltet:
einen Motor (31), der einen Abgas-Anschluss (314) beinhaltet;
eine Abgas-Leitung (34), die mit dem Abgas-Anschluss (314) verbunden ist;
einen Geräusch-Dämpfer (35), der mit der Abgas-Leitung (34) verbunden ist, und
einen Katalysator (36),
die Abgas-Leitung (34) beinhaltet:
eine erste Abgas-Leitung (41), die stromauf von dem Katalysator (36) angeordnet ist und die mit dem Abgas-Anschluss (314) verbunden ist, und
eine zweite Abgas-Leitung (34), die mit dem Geräusch-Dämpfer (35) verbunden ist,
die erste Abgas-Leitung (41) überlappt zumindest teilweise mit dem Kraftstoff-Tank (7) in einer Fahrzeug-Vorder-Ansicht, **gekennzeichnet durch**
eine Öffnung (61, 62) zum Einführen von Fahrt-Wind in einem Raum zwischen dem Kraftstoff-Tank (7) und der Fahrzeug-Körper-Abdeckung (6), wobei der Katalysator (36) in der Abgas-Leitung (34) positioniert ist, die Abgas-Leitung (34) beinhaltet weiterhin einen Katalysator-Gehäuseabschnitt (42), der den Katalysator (36) aufnimmt, der Katalysator-Gehäuseabschnitt (42) ist mit der ersten Abgas-Leitung (41) verbunden und erstreckt sich nach hinten von der ersten Abgas-Leitung (41),
die zweite Abgas-Leitung (43) ist stromab von dem Katalysator (36) positioniert und mit dem Katalysator-Gehäuseabschnitt (42) verbunden und erstreckt sich von dem Katalysator-Gehäuseabschnitt (42) nach hinten, und
der Katalysator-Gehäuseabschnitt (42) ist zumindest teilweise hinter dem Raum zwischen dem Kraftstoff-Tank (7) und der Fahrzeug-Körper-Abdeckung (6) positioniert, so dass der Katalysator (36) durch den Fahrt-Wind heruntergekühlt werden kann, der zwischen dem Kraftstoff-Tank (7) und der Fahrzeug-Körper-Abdeckung (6) während dem Fahren des Fahrzeugs strömt.

2. Ein Sattel-Reit-Fahrzeug gemäß Anspruch 1, **dadurch gekennzeichnet, dass** eine Zylinder-Achse (Ax1) des Motors (31) in einer Richtung positioniert ist, welche mit einer Vertikal-Richtung schneidet, eine Schwenk-Zentrum (C1) der Motoreinheit (8) und des Katalysator-Gehäuseabschnitts (42) sind unterhalb der Zylinder-Achse (Ax1) angeordnet, und
Der Katalysator-Gehäuseabschnitt (42) ist zumindest teilweise hinter dem Raum zwischen dem Kraftstoff-Tank (7) und der Fahrzeug-Körper-Abdeckung (6) in einem gesamten Schwenkbereich des Katalysator-Gehäuseabschnitts (42) positioniert.

3. Ein Sattel-Reit-Fahrzeug gemäß Anspruch 1 oder 2, **dadurch gekennzeichnet, dass**
der Sitz (5) einen vorderen Sitz-Abschnitt (5a), auf welchem ein Fahrer sitzen kann, beinhaltet,
der Katalysator-Gehäuseabschnitt (42) ist unter dem vorderen Sitz-Abschnitt (5a) in einer Fahrzeug-Seiten-Ansicht angeordnet,
der Katalysator-Gehäuseabschnitt (42) ist zumindest teilweise in der Fahrzeug-Seiten-Ansicht freigelegt, und der Katalysator-Gehäuseabschnitt (42) überlappt an einem inneren Querabschnitt desselben mit dem Kraftstoff-Tank (7) in der Fahrzeug-Vorder-Ansicht.

4. Ein Sattel-Reit-Fahrzeug gemäß irgendeinem der Ansprüche 1 bis 3, **dadurch gekennzeichnet, dass** der Kraftstoff-Tank (7) eine Schräge (74) beinhaltet, die nach oben zu einem lateral äußeren in der Fahrzeug-Vorder-Ansicht geneigt ist, und
die Schräge (74) überlappt zumindest teilweise mit dem Katalysator-Gehäuseabschnitt (42) in der Fahrzeug-Vorder-Ansicht, wobei die Schräge (74) zumindest teilweise mit der ersten Abgas-Leitung (41) in der Fahrzeug-Vorder-Ansicht überlappt.

5. Sattel-Reit-Fahrzeug gemäß irgendeinem der Ansprüche 1 bis 4, **dadurch gekennzeichnet, dass** die Motoreinheit (8) weiterhin eine Kühlungs-Lüfter-Vorrichtung (33) beinhaltet, und
der Katalysator-Gehäuseabschnitt (42) zumindest teilweise vor einer RotationsZentrum (C2) der Kühlungs-Lüfter-Vorrichtung (33) angeordnet ist, oder
wobei die Motoreinheit (8) weiterhin eine Kühlungs-Lüfter-Vorrichtung (33) beinhaltet, und
die Kühlungs-Lüfter-Vorrichtung (33) und der Katalysator-Gehäuseabschnitt (42) sind quer an der gleichen Seite mit Bezug auf eine Fahrzeug-Mittel-Linie angeordnet, die sich in eine Fahrzeug-Rück-undVorder-Richtung erstreckt.

6. Ein Sattel-Reit-Fahrzeug gemäß irgendeinem der Ansprüche 1 bis 5, **dadurch gekennzeichnet, dass** die Fahrzeug-Körper-Abdeckung (6) sich zu einer Position hinter dem Kraftstoff-Tank (7) erstreckt, und
der Katalysator-Gehäuseabschnitt (42) nicht zumindest teilweise mit der Fahrzeug-Körper-Abdeckung (6) in der Fahrzeug-Seiten-Ansicht überlappt.

7. Ein Sattel-Reit-Fahrzeug gemäß irgendeinem der Ansprüche 1 bis 6, **gekennzeichnet durch:**
einen Gelenk-Mechanismus (37), der die Motoreinheit (6) und den Fahrzeug-Körper-Rahmen (2) verbindet,
wobei der Katalysator-Gehäuseabschnitt (42) zumindest teilweise quer zu dem Gelenk-Mechanismus (37) angeordnet ist, oder
weiterhin umfasst:
einen Gelenk-Mechanismus (37), welche die Motoreinheit (8) und den Fahrzeug-Körper-Rahmen (2) verbindet, wobei
der Katalysator-Gehäuseabschnitt (42) zumindest teilweise hinter dem Gelenk-Mechanismus (37) in einer Fahrzeug-Unten-Ansicht angeordnet ist.

8. Sattel-Reit-Fahrzeug gemäß irgendeinem der Ansprüche 1 bis 7, **gekennzeichnet durch:**
ein Schutz-Element (51), das unter dem Katalysator-Gehäuseabschnitt (42) positioniert ist.

9. Ein Sattel-Reit-Fahrzeug gemäß Anspruch 8, **gekennzeichnet durch:**
einen Gelenk-Mechanismus (37), der die Motoreinheit (8) und den Fahrzeug-Körper-Rahmen (2) verbindet, wobei
das Schutz-Element (51) an dem Gelenk-Mechanismus (37) angebracht ist, oder
wobei das Schutz-Element (51) an dem Motor (31) angebracht ist.

10. Ein Sattel-Reit-Fahrzeug gemäß irgendeinem der Ansprüche 8 oder 9, **dadurch gekennzeichnet, dass** das Schutz-Element (51) und der Katalysator-Gehäuseabschnitt (42) dazwischen einen Wind-Führungs-Pfad (52), eine erste Öffnung (53) und eine zweite Öffnung (54) erzeugen, die erste Öffnung (53) ist vorne an dem Wind-Führungs-Pfad (52) angeordnet und kommuniziert mit einem externen Raum, die zweite Öffnung (54) ist hinten an dem Wind-Führungs-Pfad (52) angeordnet und kommuniziert mit dem externen Raum.

11. Ein Sattel-Reit-Fahrzeug gemäß irgendeinem der Ansprüche 1 bis 7, **dadurch gekennzeichnet, dass** der Motor (31) eine Rippe (55) beinhaltet, die sich an einer Position unterhalb des Katalysator-Gehäuseabschnitt (42) erstreckt.

12. Ein Sattel-Reit-Fahrzeug gemäß irgendeinem der Ansprüche 1 bis 7, **dadurch gekennzeichnet, dass** die Motoreinheit (8) weiterhin beinhaltet:
eine Kühlungs-Lüfter-Vorrichtung 33, die quer zu dem Motor (31) positioniert ist, und
ein Motor-Wärme-Isolationselement (56), das zwischen der Kühlungs-Lüfter-Vorrichtung (33) und dem Katalysator-Gehäuseabschnitt (42) positioniert ist, oder
wobei die Motoreinheit (8) weiterhin ein Motor-Wärme-Isolationselement (56) beinhaltet, das zwischen dem Motor (31) und dem Katalysator-Gehäuseabschnitt (42) positioniert ist.

13. Ein Sattel-Reit-Fahrzeug gemäß Anspruch 12, **dadurch gekennzeichnet, dass** das Motor-Wärme-Isolationselement (56) und der Katalysator-Gehäuseabschnitt (42) dazwischen einen Wind-Führungs-Pfad (52), eine erste Öffnung (53) und eine zweite Öffnung (54) erzeugen, die erste Öffnung (53) ist vorne an dem Wind-Führungs-Pfad (52) angeordnet und kommuniziert mit einem externen Raum, die zweite Öffnung (54) ist hinten an dem Wind-Führungs-Pfad (52) angeordnet und kommuniziert mit dem externen Raum.

14. Ein Sattel-Reit-Fahrzeug gemäß irgendeinem der Ansprüche 1 bis 13, **gekennzeichnet durch:**
ein Kraftstoff-Tank-Wärme-Isolationselement (57), das zwischen dem Kraftstoff-Tank und dem Katalysator-Gehäuseabschnitt (42) positioniert ist.

15. Ein Sattel-Reit-Fahrzeug gemäß irgendeinem der Ansprüche 1 bis 14, **gekennzeichnet durch:**
ein Wind-Führungselement (58) zum Führen von Fahrt-Wind, der unter dem Kraftstoff-Tank (7) strömt, um zu dem Katalysator-Gehäuseabschnitt (42) zu strömen, das Wind-Führungselement (58) ist zwischen dem Kraftstoff-Tank (7) und dem Katalysator-Gehäuseabschnitt (42) positioniert.

16. Ein Sattel-Reit-Fahrzeug gemäß irgendeinem der Ansprüche 1 bis 15, **dadurch gekennzeichnet, dass** der Katalysator-Gehäuseabschnitt (42) zumindest teilweise unterhalb einer Bodenfläche des Kraftstoff-Tanks (7) angeordnet ist, während die Motoreinheit (8) in der untersten Position in dem Schwenkbereich derselben angeordnet ist.

17. Ein Sattel-Reit-Fahrzeug gemäß irgendeinem der Ansprüche 1 bis 16, **dadurch gekennzeichnet, dass** der Fahrzeug-Körper-Rahmen (2) einen unteren Rahmen (13, 14) beinhaltet, der untere Rahmen (13, 14) verläuft unter dem flachen Fußbrett (42) und erstreckt sich nach hinten, und
der Katalysator-Gehäuseabschnitt (42) ist zumindest teilweise unter dem unteren Rahmen (13, 14) in der Fahrzeug-Vorder-Ansicht angeordnet.

## Revendications

1. Véhicule de type à selle comprenant:
un châssis de carrosserie de véhicule (2);
un siège (5) pris en charge le châssis de carrosserie du véhicule (2);
un marchepied plat (24) étant disposé en avant et sous le siège (5); un réservoir de carburant (7) étant disposé sous le marchepied plat (24);
un capot de carrosserie de véhicule (6) étant disposé latéralement sur le réservoir de carburant (7); et
une unité de moteur (8) étant disposée vers l'arrière du marchepied plat (24) et le réservoir de carburant (7) et étant pris en charge de manière pivotante par le châssis de carrosserie de véhicule (2), dans lequel
l'unité de moteur (8) est au moins partiellement située sous le siège (5), l'unité de moteur (8) comprend:
un moteur (31) comprenant un orifice d'échappement (314),
un tuyau d'échappement (34) étant connecté à l'orifice d'échappement (314),
un silencieux (35) étant connecté au tuyau d'échappement (34), et un pot catalytique (36),
le tuyau d'échappement (34) inclut:
un premier tuyau d'échappement (41) étant situé en amont du catalyseur (36) et étant connecté à l'orifice d'échappement (314) et
un second tuyau d'échappement (43) étant connecté au silencieux (35), le premier tuyau d'échappement (41) chevauche au moins partiellement avec le réservoir de carburant (7) dans une vue de face du véhicule, **caractérisé par**
une ouverture (61, 62) pour l'introduction du vent de déplacement d'un espace entre le réservoir de carburant (7) et le capot de carrosserie de véhicule (6), dans lequel
le pot catalytique (36) est disposé dans le tuyau d'échappement (34), le tuyau d'échappement (34) comprend en outre une partie de logement de pot catalytique (42) logeant le pot catalytique (36),
la partie de boîtier de pot catalytique (42) étant connectée au premier tuyau d'échappement (41) et s'étendant vers l'arrière à partir du premier tuyau d'échappement (41),
le second tuyau d'échappement (43) est situé en aval du pot catalytique (36), et connecté à la partie de boîtier de pot catalytique (42), s'étendant vers l'arrière à partir du boîtier de pot catalytique portion (42), et
la partie de boîtier de pot catalytique (42) est au moins partiellement disposée à l'arrière de l'espace entre le réservoir de carburant (7) et le capot de carrosserie de véhicule (6) de sorte que le pot catalytique (36) peut être refroidi par le vent de déplacement circulant entre le réservoir de carburant (7) et le capot de carrosserie de véhicule (6) pendant le déplacement du véhicule.

2. Véhicule de type à selle selon la revendication 1, **caractérisé en ce qu'**un axe de cylindre (Ax1) du moteur (31) est disposé dans une direction coupant une direction verticale,
un centre de pivotement (C1) de l'unité de moteur (8) et la partie de boîtier de pot catalytique (42) sont situés sous l'axe de cylindre (Ax1) et
la partie de boîtier de pot catalytique (42) est au moins partiellement disposée à l'arrière de l'espace entre le réservoir de carburant (7) et le capot de carrosserie de véhicule (6) dans une plage de pivotement entière de la partie de boîtier de pot catalytique (42).

3. Véhicule de type à selle selon la revendication 1 ou la revendication 2, **caractérisé en ce que** le siège (5) comprend une partie de siège avant (5a) pouvant accueillir un pilote,
la partie de boîtier de pot catalytique (42) est située sous la partie de siège avant (5a) dans une vue de côté du véhicule,
la partie de boîtier de pot catalytique (42) est au moins partiellement exposée à la vue de côté du véhicule, et la partie de boîtier de pot catalytique (42) chevauche sur une partie latérale intérieure de celle-ci avec le réservoir de carburant (7) dans la vue de face du véhicule.

4. Véhicule de type à selle selon l'une quelconque des revendications 1 à 3, **caractérisé en ce que** le réservoir du combustible (7) comprend une pente (74) basculante vers le côté arrière vers l'extérieur dans la vue de face du véhicule,
et
la pente (74) se chevauche au moins partiellement avec la partie de boîtier de pot catalytique (42) dans la vue de face du véhicule, dans lequel la pente (74) se chevauche au moins partiellement avec le premier tuyau d'échappement (41) dans la vue de face du véhicule.

5. Véhicule de type à selle selon l'une quelconque des revendications 1 à 4, **caractérisé en ce que** l'unité de moteur (8) comprend en outre un dispositif de ventilation de refroidissement (33), et
la partie de boîtier de pot catalytique (42) est située au moins partiellement en avant d'un centre de rotation (C2) du dispositif de ventilation de refroidissement (33), ou
dans lequel l'unité de moteur (8) comprend en outre un dispositif de ventilateur de refroidissement (33), et
le dispositif de ventilation de refroidissement (33) et la partie de boîtier de pot catalytique (42) sont disposés latéralement du même côté par rapport à une ligne centrale de véhicule s'étendant dans une direction de va-et-vient du véhicule.

6. Véhicule de type à selle selon l'une quelconque des revendications 1 à 5, **caractérisé en ce que** le capot du carrosserie de véhicule (6) s'étend jusqu'à une position vers l'arrière du réservoir de carburant (7), et la partie de boîtier de pot catalytique (42) ne se chevauche au moins partiellement avec le capot de carrosserie de véhicule (6) dans une vue de côté du véhicule.

7. Véhicule de type à selle selon l'une quelconque des revendications 1 à 6, **caractérisé par:**
un mécanisme de liaison (37) connectant l'unité de moteur (8) et le châssis de carrosserie de véhicule (2),
dans lequel la partie de boîtier de pot catalytique (42) est située au moins partiellement latéralement sur le mécanisme de liaison (37), ou
comprenant en outre:
un mécanisme de liaison (37) connectant l'unité de moteur (8) et le châssis de carrosserie de véhicule (2),
dans lequel
la partie de boîtier de pot catalytique (42) est située au moins partiellement vers l'arrière du mécanisme de liaison (37) dans une vue inférieure du véhicule.

8. Véhicule de type à selle selon l'une quelconque des revendications 1 à 7, **caractérisé par:**
un élément de protection (51) étant disposé sous la partie de boîtier de pot catalytique (42).

9. Véhicule de type à selle selon la revendication 8, **caractérisé par:**
un mécanisme de liaison (37) connectant l'unité de moteur (8) et le châssis de carrosserie de véhicule (2),
dans lequel
l'élément de protection (51) est attaché au mécanisme de liaison (37), ou
dans lequel l'élément de protection (51) est attaché au moteur (31).

10. Véhicule de type à selle selon l'une quelconque des revendications 8 ou 9, **caractérisé en ce que** l'élément de protection (51) et la partie de boîtier de pot catalytique (42) produisent entre eux un chemin de guidage du vent (52), une première ouverture (53) et une seconde ouverture (54), la première ouverture (53) étant située en avant du chemin de guidage du vent (52) et communiquant avec un espace externe, la seconde ouverture (54) étant située à l'arrière du chemin de guidage du vent (52) et communiquant avec l'espace externe.

11. Véhicule de type à selle selon l'une quelconque des revendications 1 à 7, **caractérisé en ce que** le moteur (31) comprend une nervure (55) s'étendant jusqu'à une position située sous la partie de boîtier de pot catalytique (42).

12. Véhicule de type à selle selon l'une quelconque des revendications 1 à 7, **caractérisé en ce que** l'unité de moteur (8) comprend en outre:
un dispositif de ventilation de refroidissement (33) étant disposé latéralement sur le moteur (31), et
un élément d'isolation thermique du moteur (56) étant disposé entre le dispositif de ventilation de refroidissement (33) et la partie de boîtier de pot catalytique (42), ou
dans lequel l'unité de moteur (8) comprend en outre un élément d'isolation thermique du moteur (56) disposé entre le moteur (31) et la partie de boîtier (42).

13. Véhicule de type à selle selon la revendication 12, **caractérisé en ce que** l'élément d'isolation thermique du moteur (51) et la partie de boîtier de pot catalytique (42) produisent entre eux un chemin de guidage du vent (52), une première ouverture (53) et une seconde ouverture (54), la première ouverture (53) étant située en avant du chemin de guidage du vent (52) et communiquant avec un espace externe, la seconde ouverture (54) étant située à l'arrière du chemin de guidage du vent (52) et communiquant avec l'espace externe.

14. Véhicule de type à selle selon l'une quelconque des revendications 1 à 13, **caractérisé par:**
un élément d'isolation thermique du réservoir de carburant (57) étant disposé entre le réservoir de carburant (7) et la partie de boîtier de pot catalytique (42).

15. Véhicule de type à selle selon l'une quelconque des revendications 1 à 14, **caractérisé par:**
un élément de guidage du vent (58) permettant de guider le vent passant sous le réservoir de carburant (7) pour qu'il s'écoule vers la partie de boîtier de pot catalytique (42), l'élément de guidage du vent (58) étant disposé entre le réservoir de carburant (7) et la partie de boîtier de pot catalytique (42).

16. Véhicule de type à selle selon l'une quelconque des revendications 1 à 15, **caractérisé en ce que** la partie de boîtier de pot catalytique (42) est au moins partiellement située sous une surface inférieure du réservoir de carburant (7) alors que l'unité de moteur (8) est située dans la position la plus basse dans une plage de pivotement de celui-ci.

17. Véhicule de type à selle selon l'une quelconque des revendications 1 à 16, **caractérisé en ce que** le châssis de carrosserie de véhicule (2) comprend un châssis inférieur (13, 14), le châssis inférieur (13, 14) passant sous le marchepied plat (24) et s'étendant vers l'arrière, et la partie de boîtier de pot catalytique (42) est située au moins partiellement sous le châssis inférieur (13,14) dans une vue de face du véhicule.
